# EUROPEAN PATENT APPLICATION

(11) **EP 1 139 239 A2**
(43) Date of publication of application: **04.10.2001**
(21) Application number: 01302833.7
(22) Date of filing: 27.03.2001
(51) Int. Cl.: G06F 17/30

(54) **Scheme for multimedia data retrieval using event names and time or location information**

(30) Priority: 29.03.2000 JP 2000091024
(71) Applicant: KABUSHIKI KAISHA TOSHIBA, Kawasaki-shi, Kanagawa-ken 210-8572 (JP)
(72) Inventor: Kanai, Tatsunori, Intellectual Prop. Div., Tokyo (JP); Maeda, Seiji, Intellectual Prop. Div., Tokyo (JP); Yao, Hiroshi, Intellectual Prop. Div., Tokyo (JP); Yano, Hirokuni, Intellectual Prop. Div., Tokyo (JP)
(74) Representative: Midgley, Jonathan Lee

(57) **Abstract**

In a multimedia data retrieval device, each one of a plurality of multimedia data is managed in relation to time information and/or location information indicating a time and/or a location at which each multimedia data is created. Then, the time information and/or the location information corresponding to a retrieval request are obtained upon receiving the retrieval request specified by using event names, and multimedia data are retrieved from the plurality of multimedia data according to the obtained time information and/or location information.

## Description

### BACKGROUND OF THE INVENTION

### FIELD OF THE INVENTION

The present invention relates to a scheme for retrieving a desired multimedia data from a plurality of multimedia data.

### DESCRIPTION OF THE BACKGROUND ART

Due to the advance of instruments such as digital cameras (digital still cameras), image scanners, and file scanners, digital video cameras, it has become possible to easily produce multimedia data containing digital still images (photographs, documents, etc.), digital moving pictures (video, etc.) and digital audio data or their combinations, and such multimedia data are utilized in a variety of fields.

The multimedia data are often managed by using a file system or database management system of a computer or a dedicated software, and there have been many propositions for making a retrieval of a necessary multimedia data easier.

Conventionally, the widely used multimedia data management method has been a method for classifying a plurality of files containing multimedia data such as still images, moving pictures, audio data, etc., by creating groups called directories or folders.

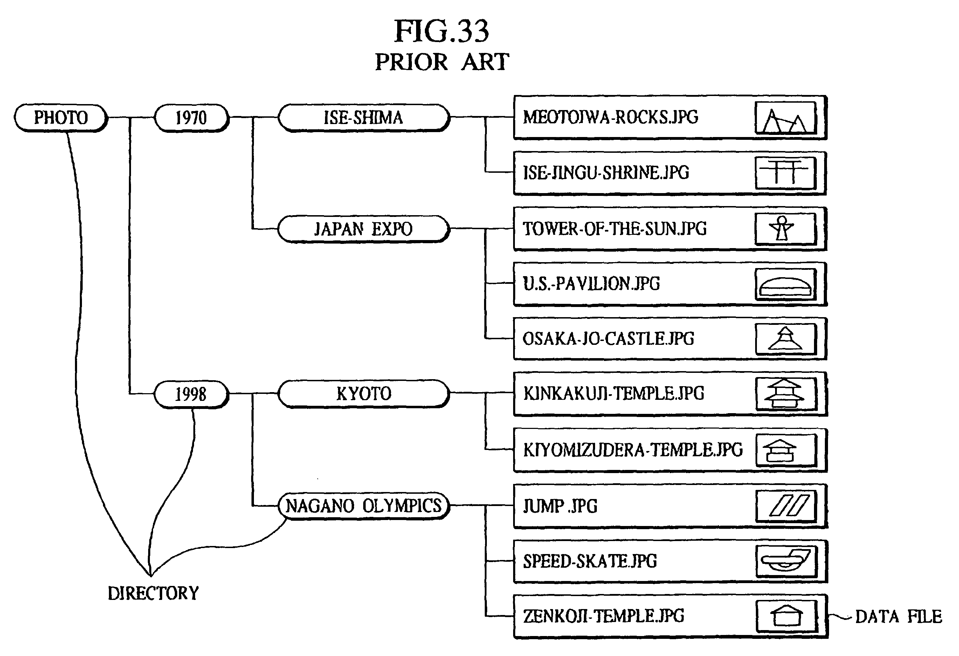

Fig. 33 shows a concrete example of this method. In the example shown in Fig. 33, two directories "1970" and "1998" are created below a directory "PHOTO", and two directories "ISE-SHIMA" and "JAPAN EXPO" are created below the directory "1970", and two directories "KYOTO" and "NAGANO OLYMPICS" are created below the director "1998".

In addition, below the directory "ISE-SHIMA", "MEOTOIWA-ROCKS.JPG" which is data for a photograph of the "Meotoiwa rocks" and "ISE-JINGU-SHRINE.JPG" which is data for a photograph taken at the "Ise-jingu shrine", both of which are taken by a digital camera during a trip to Ise-shima are managed.

Similarly, below the directory "JAPAN EXPO", "TOWER-OF-THE-SUN.JPG" which is data for a photograph taken at the "Tower of the sun" and "U.S.-PAVILION.JPG" which is data for a photograph taken at the "U.S. pavilion", both of which are taken at the EXP0 site during a trip to Osaka to see the Japan EXPO, as well as "OSAKA-JO-CASTLE.JPG" which is data for a photograph taken at the "Osaka-jo castle" on the way back from that trip are managed.

Similarly, below the directory "KYOTO". "KINKAKUJI-TEMPLE.JPG" which is data for a photograph of the "Kinkakuji temple" and "KIYOMIZUDERA-TEMPLE.JPG" which is data for a photograph of the "Kiyomizudera temple", both of which are taken by a digital camera during a trip to Kyoto are managed.

Similarly. below the directory "NAGANO OLYMPICS", "JUMP.JPG" which is data for a photograph taken at the jump game site and "SPEED-SKATE.JPG" which is data for a photograph taken at the speed-skate game site, both of which are taken during a trip to see the Nagano Olympics, as well as "ZENKOJI-TEMPLE.JPG" which is data for a photograph taken at the "Zenkoji temple" on the way back from that trip are managed.

These photograph data are assumed to be still image data in the JPEG format in forms of files having an extension ".JPG", but they can be given in any other data format.

Now, the conventionally widely used method for retrieving such multimedia data has been a method for attaching keywords for the purpose of retrieval to each multimedia data and retrieving each multimedia data by using its keyword.

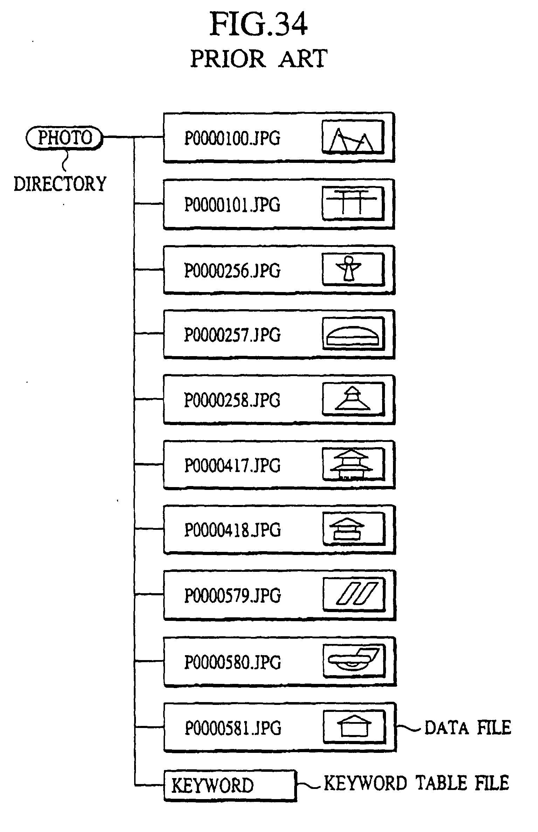

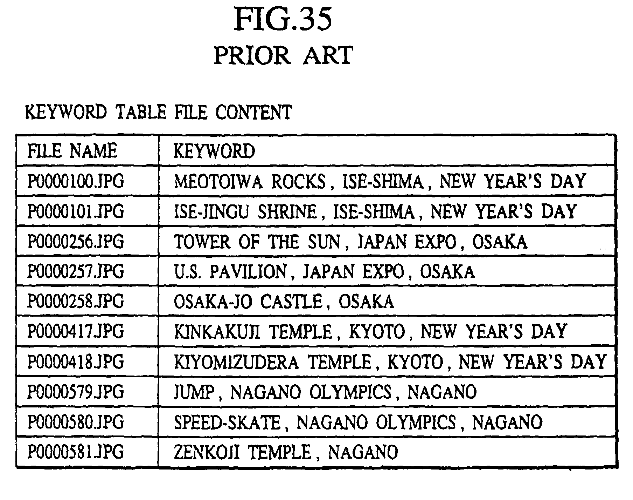

Fig. 34 and Fig. 35 show a concrete example of this method, where Fig. 35 shows an exemplary content of the keyword table file "KEYWORD" appearing in Fig. 34.

In the example shown in Fig. 34 and Fig. 35, files for ten photograph data from "P0000100.JPG" to "P0000581.JPG" are managed under a directory "PHOTO" in the file system. and a list of keywords attached to these individual files are managed in a file "KEYWORD" as a keyword table. Here, the data are managed by attaching arbitrary number of keywords to each data such that "P0000100.JPG" has three keywords "Meotoiwa rocks", "Ise-shima" and "New year's day", "P0000191.JPG" has three keywords "Ise-jingu shrine", "Ise-shima" and "New year's day", and so on.

By managing data in this way, when data for photographs taken at Ise-shima are necessary, "P0000100.JPG" and "P0000101.JPG" which have the keyword "Ise-shima" can be selected, for example. The keywords can be managed in various methods such as a method for creating a file for maintaining correspondences between file names of photograph data and keywords attached to them as in the example shown in Fig. 34 and Fig. 35, or a method using a database management system.

The conventional method described above can be used for management of data in a variety of formats such as still Images like photograph data used in the above example. moving picture data like videos and audio data, usual text file like data, some measurement data, and links to other data such as URLs of the WEB.

For arrangement of photograph data of a digital camera, there is also a method using an album software which arranges photographs on an electronic document in a manner similar to an ordinary album for arranging ordinary photographs printed on photographic papers.

In the data formats for photograph data taken by a digital camera (or a digital still camera) and video data taken by a digital video camera, the attribute information such as a time and a location of the image taking can be recorded, as disclosed in the "digital still camera image file format specification (Exif) Version 2.1" (JEIDA-49-1998) by Japan Electronics Industry Development Association, and "Recording-Helical-scan digital video cassette recording system using 6.35 mm magnetic tape for consumer use (525-60, 625-50, 1125-60 and 1250-50 systems)" by IEC (International Electrotechnical Commission).

There are some digital cameras and digital video cameras which have a function for automatically recording the image taking time and location information as attributes of data according to these formats, using information obtained from a built-in clock and a GPS or the like.

By utilizing the attribute information such as image taking time and image taking location that is automatically attached, it is possible to retrieve data by specifying the image taking time or longitude and latitude of the image taking location, without requiring tedious tasks of classifying data or attaching keywords as in the conventional methods described above.

However, in order to retrieve data by specifying a location by a set of longitude and latitude, it is necessary to know the longitude and the latitude of that location in advance. In order to make this retrieval easier, there is a scheme for displaying a map on a screen and arranging photographs at their image taking locations on the map.

There is also a scheme for providing a table of correspondences between a location name and longitude and latitude set of a representative point indicated by the location name such that when the location name is specified, the longitude and latitude set of the corresponding representative point is checked and photographs taken in a vicinity of that point are retrieved.

As described. the conventionally widely used scheme for managing multimedia data by classifying them into directories has a drawback that it requires tedious tasks of classifying data into directories with names that are easily comprehensible to the human being, and giving easily comprehensible names to individual files if necessary. Moreover, when there are data that can be classified into more than one groups conceptually, it has been necessary to make copies and enter them into a plurality of directories or make it appear as if one data is virtually existing in a plurality of directories by using a link mechanism.

Also, the conventionally widely used scheme for managing and retrieving multimedia data by attaching keywords to them has a drawback that it requires tedious tasks of attaching keywords. In addition, there is also a drawback that keywords that are convenient for the retrieval purpose must be attached in order to facilitate the data retrieval.

Also, the scheme for creating an electronic album by using an album software for a digital camera has a drawback that the operation to create an album itself is tedious.

On the other hand, the scheme for utilizing the image taking time or image taking location information that is automatically attached by a digital camera or a digital video camera requires no manual task for attaching keywords or classifying data for the purpose of the retrieval. However, in order to carry out the retrieval by specifying the time or the location accurately, there is a need to know the image taking time or the image taking location of the retrieval target more or less accurately in advance, so that it is difficult to realize a practically usable retrieval.

There is also a scheme for providing a table of correspondences between a location name and longitude and latitude set of a representative point indicated by the location name and retrieving data of a nearby location by specifying a location name rather than specific numerical values of longitude and latitude, but even in this scheme, it has been impossible to carry out the retrieval by specifying a concept other than the location name.

In the scheme using directory names or keywords, terms that are not location names but representing concepts that are easily comprehensible to the human being such as "Nagano Olympics" or "Japan EXPO", for example, can be used for directory names or keywords , so that it is possible to realize the retrieval that is more intuitive and easily comprehensible. However, it has been difficult to realize the retrieval by using concepts that are easily comprehensible to the human being based on the automatically attached information such as time and location information alone.

### SUMMARY OF THE INVENTION

It is therefore an object of the present invention to provide a multimedia data retrieval scheme capable of realizing flexible retrieval of multimedia data by using concepts that are easily comprehensible to the human being based on the automatically attached information such as time and location information, without requiring tedious tasks such as classifying multimedia data or attaching keywords for the purpose of the retrieval.

It is another object of the present invention to provide a multimedia data retrieval scheme capable of displaying information representing contents recorded in multimedia data by using concepts that are easily comprehensible to the human being based on the automatically attached information such as time and location information, without requiring tedious tasks such as classifying multimedia data or attaching keywords in advance.

According to one aspect of the present invention there is provided a multimedia data retrieval method, comprising: (a) managing each one of a plurality of multimedia data in relation to time information and/or location information indicating a time and/or a location at which each multimedia data is created; (b) obtaining the time information and/or the location information corresponding to a retrieval request upon receiving the retrieval request specified by using event names; and (c) retrieving multimedia data from the plurality of multimedia data managed by the step (a), according to the time information and/or the location information obtained by the step (b).

According to another aspect of the present invention there is provided a multimedia data retrieval device. comprising: a data management unit configured to manage each one of a plurality of multimedia data in relation to time information and/or location information indicating a time and/or a location at which each multimedia data is created; a processing unit configured to obtain the time information and/or the location information corresponding to a retrieval request upon receiving the retrieval request specified by using event names; and a data selection unit configured to retrieve multimedia data from the plurality of multimedia data managed by the data management unit, according to the time information and/or the location information obtained by the processing unit.

According to another aspect of the present invention there is provided a computer usable medium having computer readable program codes embodied therein for causing a computer to function as a multimedia data retrieval device, the computer readable program codes include: a first computer readable program code for causing said computer to manage each one of a plurality of multimedia data in relation to time information and/or location information indicating a time and/or a location at which each multimedia data is created; a second computer readable program code for causing said computer to obtain the time information and/or the location information corresponding to a retrieval request upon receiving the retrieval request specified by using event names; and a third computer readable program code for causing said computer to retrieve multimedia data from the plurality of multimedia data managed by the first computer readable program code, according to the time information and/or the location information obtained by the second computer readable program code.

According to another aspect of the present invention there is provided an index information providing method. comprising: (a) receiving a retrieval request specified by using event names, through a network from a requestor; (b) obtaining time information and/or location information corresponding to the retrieval request received by the step (a) according to the event names used in the retrieval request by referring to an index table that contains a plurality of event names and the time information and/or the location information that are related to each event name, the time information and/or the location information indicating a time and/or a location at which each multimedia data is created: and (c) providing the time information and/or the location information obtained by the step (b) as an index information, through the network to the requestor.

According to another aspect of the present invention there is provided an index server, comprising: a request reception unit configured to receive a retrieval request specified by using event names, through a network from a requestor; a processing unit configured to obtain time information and/or location information corresponding to the retrieval request received by the request reception unit according to the event names used in the retrieval request by referring to an index table that contains a plurality of event names and the time information and/or the location information that are related to each event name, the time information and/or the location information indicating a time and/or a location at which each multimedia data is created; and an index information transmission unit configured to provide the time information and/or the location information obtained by the processing unit as an index information, through the network to the requestor.

According to another aspect of the present invention there is provided a computer usable medium having computer readable program codes embodied therein for causing a computer to function as an index server, the computer readable program codes include: a first computer readable program code for causing said computer to receive a retrieval request specified by using event names, through a network from a requestor; a second computer readable program code for causing said computer to obtain time information and/or location information corresponding to the retrieval request received by the first computer readable program code according to the event names used in the retrieval request by referring to an index table that contains a plurality of event names and the time information and/or the location information that are related to each event name, the time information and/or the location information indicating a time and/or a location at which each multimedia data is created; and a third computer readable program code for causing said computer to provide the time information and/or the location information obtained by the second computer readable program code as an index information, through the network to the requestor.

According to another aspect of the present invention there is provided a multimedia data retrieval method, comprising: (a) managing each one of a plurality of multimedia data in relation to time information and/or location information indicating a time and/or a location at which each multimedia data is created; (b) receiving a retrieval request specified by using event names, through a network from a requestor; (c) obtaining the time information and/or the location information corresponding to the retrieval request received by the step (b); (d) retrieving multimedia data from the plurality of multimedia data managed by the step (a), according to the time information and/or the location information obtained by the step (c); and (e) providing the multimedia data retrieved by the step (d) as a retrieval result, through the network to the requestor.

According to another aspect of the present invention there is provided a multimedia data retrieval server, comprising: a data management unit configured to manage each one of a plurality of multimedia data in relation to time information and/or location information indicating a time and/or a location at which each multimedia data is created; a request reception unit configured to receive a retrieval request specified by using event names, through a network from a requestor; a processing unit configured to obtain the time information and/or the location information corresponding to the retrieval request received by the request reception unit; a data selection unit configured to retrieve multimedia data from the plurality of multimedia data managed by the data management unit, according to the time information and/or the location information obtained by the processing unit; and a retrieval result transmission unit configured to provide the multimedia data retrieved by the data selection unit as a retrieval result, through the network to the requestor.

According to another aspect of the present invention there is provided a computer usable medium having computer readable program codes embodied therein for causing a computer to function as a multimedia data retrieval server. the computer readable program codes include: a first computer readable program code for causing said computer to manage each one of a plurality of multimedia data in relation to time information and/or location information indicating a time and/or a location at which each multimedia data is created: a second computer readable program code for causing said computer to receive a retrieval request specified by using event names, through a network from a requestor; a third computer readable program code for causing said computer to obtain the time information and/or the location information corresponding to the retrieval request received by the second computer readable program code; a fourth computer readable program code for causing said computer to retrieve multimedia data from the plurality of multimedia data managed by the first computer readable program code, according to the time information and/or the location information obtained by the third computer readable program code; and a fifth computer readable program code for causing said computer to provide the multimedia data retrieved by the fourth computer readable program code as a retrieval result, through the network to the requestor.

According to another aspect of the present invention there is provided a method for providing an index information providing service from an index server to multimedia data retrieval devices which are connected through a network, each multimedia data retrieval device managing each one of a plurality of multimedia data in relation to time information and/or location information indicating a time and/or a location at which each multimedia data is created, the method comprising: (a) receiving a retrieval request specified by using event names, at the index server through the network from a requesting multimedia data retrieval device; (b) obtaining the time information and/or the location information corresponding to the retrieval request received by the step (a) at the index server according to the event names used in the retrieval request by referring to an index table that contains a plurality of event names and the time information and/or the location information that are related to each event name; and (c) providing the time information and/or the location information obtained by the step (b) as an index information, from the index server through the network to the requesting multimedia data retrieval device, so as to enable the requesting multimedia data retrieval device to retrieve multimedia data from the plurality of multimedia data according to the time information and/or the location information obtained from the index server.

According to another aspect of the present invention there is provided a method for providing a multimedia data retrieval service from a multimedia data retrieval server to clients which are connected through a network, the method comprising: (a) managing each one of a plurality of multimedia data at the multimedia data retrieval server in relation to time information and/or location information indicating a time and/or a location at which each multimedia data is created; (b) receiving a retrieval request specified by using event names, at the multimedia data retrieval server through a network from a requesting client; (c) obtaining the time information and/or the location information corresponding to the retrieval request received by the step (b) at the multimedia data retrieval server; (d) retrieving multimedia data from the plurality of multimedia data managed by the step (a) at the multimedia data retrieval server, according to the time information and/or the location information obtained by the step (c); and (e) providing the multimedia data retrieved by the step (d) as a retrieval result, from the multimedia data retrieval server through the network to the requesting client, so as to enable the requesting client to obtain the multimedia data matching with the retrieval request.

Other features and advantages of the present invention will become apparent from the following description taken in conjunction with the accompanying drawings.

### BRIEF DESCRIPTION OF THE DRAWINGS

Fig. 1 is a block diagram showing one exemplary configuration of a multimedia data retrieval device according to one embodiment of the present invention.

Fig. 2 is a diagram showing one exemplary manner of data management at a data management unit in the multimedia data retrieval device of Fig. 1.

Fig. 3 is a diagram showing another exemplary manner of data management at a data management unit in the multimedia data retrieval device of Fig. 1.

Fig. 4 is a diagram showing another exemplary manner of data management at a data management unit in the multimedia data retrieval device of Fig. 1.

Fig. 5 is a diagram showing still another exemplary manner of data management at a data management unit in the multimedia data retrieval device of Fig. 1.

Fig. 6 is a diagram showing still another exemplary manner of data management at a data management unit in the multimedia data retrieval device of Fig. 1.

Fig. 7 is a diagram showing yet another exemplary manner of data management at a data management unit in the multimedia data retrieval device of Fig. 1.

Fig. 8 is a block diagram showing one exemplary configuration of an index processing unit in the multimedia data retrieval device of Fig. 1.

Fig. 9 is a diagram showing an exemplary content of an index table used in the index processing unit of Fig. 8.

Fig. 10 is a flow chart for an exemplary operation of an index retrieval unit in the index processing unit of Fig. 8.

Fig. 11 is a block diagram showing another exemplary configuration of a multimedia data retrieval device according to one embodiment of the present invention.

Fig. 12 is a block diagram showing an exemplary configuration of an index processing unit in the multimedia data retrieval device of Fig. 11.

Fig. 13 is a block diagram showing an exemplary configuration of an index server according to one embodiment of the present invention.

Fig. 14 is a block diagram showing another exemplary configuration of an index processing unit in the multimedia data retrieval device of Fig. 1.

Fig. 15 is a block diagram showing another exemplary configuration of an index processing unit in the multimedia data retrieval device of Fig. 11.

Fig. 16 is a flow chart for an exemplary operation of a data selection unit in the multimedia data retrieval device of Fig. 1 or Fig. 11.

Fig. 17 is a diagram showing one exemplary front-end program display screen that can be used in the multimedia data retrieval device of Fig. 1 or Fig. 11.

Fig. 18 is a diagram showing an exemplary front-end program display screen in the multimedia data retrieval device of Fig. 1 or Fig. 11 for one method of narrowing down the retrieval result.

Fig. 19 is a diagram showing an exemplary front-end program display screen in the multimedia data retrieval device of Fig. 1 or Fig. 11 for one method of narrowing down the retrieval result.

Fig. 20 is a diagram showing an exemplary front-end program display screen in the multimedia data retrieval device of Fig. 1 or Fig. 11 for one method of narrowing down the retrieval result.

Fig. 21 is a diagram showing an exemplary front-end program display screen in the multimedia data retrieval device of Fig. 1 or Fig. 11 for another method of narrowing down the retrieval result.

Fig. 22 is a diagram showing an exemplary front-end program display screen in the multimedia data retrieval device of Fig. 1 or Fig. 11 for still another method of narrowing down the retrieval result.

Fig. 23 is a diagram showing an exemplary front-end program display screen in the multimedia data retrieval device of Fig. 1 or Fig. 11 for still another method of narrowing down the retrieval result.

Fig. 24 is a diagram showing another exemplary front-end program display screen that can be used in the multimedia data retrieval device of Fig. 1 or Fig. 11.

Fig. 25 is a diagram showing still another exemplary front-end program display screen that can be used in the multimedia data retrieval device of Fig. 1 or Fig. 11.

Fig. 26 is a schematic diagram showing one exemplary configuration of a system using a multimedia data retrieval server according to one embodiment of the present invention.

Fig. 27 is a schematic diagram showing another exemplary configuration of a system using a multimedia data retrieval server according to one embodiment of the present invention.

Fig. 28 is a block diagram showing an exemplary configuration of a multimedia data retrieval device according to another embodiment of the present invention.

Fig. 29 is a flow chart for an exemplary operation of a reverse look-up retrieval unit in the multimedia data retrieval device of Fig. 28.

Fig. 30 is a block diagram showing another exemplary configuration of a multimedia data retrieval device according to another embodiment of the present invention.

Fig. 31 is a block diagram showing an exemplary configuration of an index server according to another embodiment of the present invention.

Fig. 32 is a diagram showing one exemplary front-end program display screen that can be used in the multimedia data retrieval device of Fig. 28 or Fig. 30.

Fig. 33 is a diagram showing one conventional manner for multimedia data management using directories.

Fig. 34 is a diagram showing another conventional manner for multimedia data management using keywords.

Fig. 35 is a diagram showing another conventional manner for multimedia data management using keywords.

### DETAILED DESCRIPTION OF THE PREFERRED EMBODIMENTS

First, the major features of the present invention will be briefly summarized.

In the present invention, each multimedia data is managed by using time information and location information that are automatically attached or acquired at or around a time of obtaining the multimedia data, and an index table registering a correspondence between an event name and the time/location information is provided. Then, when a retrieval request specified by using the event name is received, the time information and/or the location information corresponding to the retrieval request are obtained according to the event name, and the multimedia data is retrieved according to the obtained time information and/or location information.

In this way, according to the present invention, there is no need for tedious tasks of classifying the multimedia data to be managed into directories or folders or attaching keywords, and it becomes possible to realize the retrieval of the desired multimedia data by using an event name or a combination of event names that are intuitive and easily comprehensible to users. Also, by providing the index table at an index server, it is possible to add a new event name at the server side, so that it becomes possible to realize the retrieval using a new event name without requiring the user to update the index table.

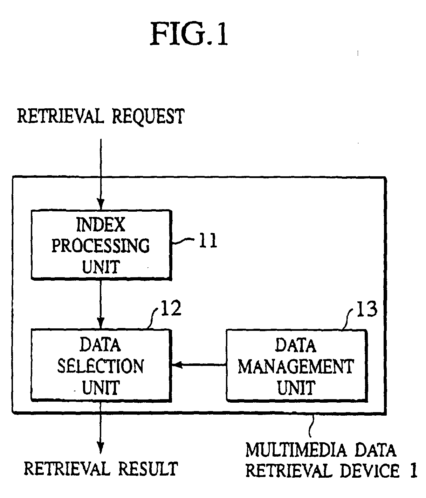

Referring now to Fig. 1 to Fig. 27, one embodiment of a multimedia data retrieval scheme according to the present invention will be described in detail.

In a multimedia data retrieval device of the present invention, it is presupposed that at least either one or both of time information and location information are related to the individual multimedia data that is to be a retrieval target, and the retrieval, the display, etc., are realized by utilizing at least these information. In the following, this embodiment will be described for an exemplary case of using both the time information and the location information.

Also, this embodiment is directed to an exemplary case where there is an attribute information (either one or both of the time information and the location information) that is automatically related to the multimedia data by an imaging device or an associated device, and this attribute information is utilized.

As already mentioned above, in the data formats for photograph data taken by a digital camera (or a digital still camera) and video data taken by a digital video camera, the attribute information such as a time and a location of the image taking can be recorded. There are some digital cameras and digital video cameras which have a function for automatically recording the image taking time and location information as attributes of data according to these formats, using information obtained from a built-in clock and a GPS (which can be built-in in a camera or externally attached to a camera) or the like, so that this function can be utilized.

There are many digital cameras and digital video cameras which have a function for recording information on the image taking time but no function for recording a location. In the case of using such a digital camera or digital video camera, a portable GPS device that can regularly record time and location can be carried around together with the digital camera or digital video camera. The obtained photograph or video has the image taking time information attached, so that the location information of the image taking time can be deduced from data of the portable GPS device and utilized as the image taking location information.

Besides the GPS, it is also possible to obtain the location information by utilizing PHS, Bluetooth, etc. In the case where the portable GPS or the like is not available, it is also possible to manually attach the location information by referring to the map data.

With respect to a set of multimedia data to which the attribute information such as time and location are attached as described above, the multimedia data retrieval device of the present invention realizes the retrieval based on "events".

In the present invention, "events" represent various concepts that are related to at least one and at most n (n ≥ 1) types of the attribute information among the n types of the attribute information that can be given to the multimedia data, and a name given to such a concept will be referred to as an "event name".

This embodiment is directed to an exemplary case of using time and location as the attribute information, so that an event in this embodiment is related to either one or both of time and location.

For example, "Nagano Olympics" is an event name, and the period of time and the place at which the Nagano Olympics was held are related to this term as the time information and the location information respectively. The other event names for which the period of time and the place at which each event was held can be related as the time information and the location information include "Japan EXPO", "Yokohama national athletic meeting", "Okinawa Summit" and "Electronics show '99", for example.

The events include those that are held many times such as "Gion festival", "Olympics", "Summit" and "Electronics show". For such an event, plural sets of the time information and the location information indicating the times and the places at which the event was held are related.

Also, the events include those which have only either one of the time information and the location information. For example, the event names to which only the location information is related include "Shinshu", "Shinjuku", "Mt. Fuji". "Yokohama municipal xxx elementary school", "xx corporation yy factory", etc. Note however that an event name representing a location may also has the time information as in the case of a place name that was used in the past but is no longer used today or a place name that is given only recently. There are also event names to which only the time information is related without any fixed location information such as "World children year", "Tenth national safety and sanitation month", etc. There are also events that are held at a prescribed period of time every year or once in every prescribed number of years such as "New year's day". "Christmas" "St. Valentine's day", "Intercalary year", etc., to which plural sets of the time information are to be related.

Fig. 1 shows an exemplary configuration of a multimedia data retrieval device according to one embodiment of the present invention.

The multimedia data retrieval device 1 of Fig. 1 generally comprises an index processing unit 11, a data selection unit 12 and a data management unit 13.

In the case of using both the time information and the location information, the basic operation of each constituent element of the multimedia data retrieval device 1 of Fig. 1 is as follows.

The data management unit 13 is managing the multimedia data in relation to both the time information and the location information.

The index processing unit 11 receives an input of a retrieval request given by one event name or a combination of a plurality of event names, and takes out the time information or the location information, or the time information and the location information corresponding to the entered event names (namely, depending on the event names, there can be cases where the time information is taken out but there is no location information, cases where the location information is taken out but there is no time information, and cases where the time information and the location information are taken out).

Note that, in the case where the input is a retrieval request given by a combination of a plurality of event names, it is assumed that a plurality of event names will be handled as additive conditions in the exemplary case of this embodiment, and more specifically, this embodiment is directed to an exemplary case of narrowing down the time information and the location information by carrying out a logical calculation for taking AND of a plurality of time information or a plurality of location information that are taken out for a plurality of event names. It is obviously also possible to specify an appropriate logical calculation to be carried out with respect to a plurality of event names such as AND, OR or NOT (in which case it suffices to carry out the specified logical calculation such as AND. OR or NOT).

The data selection unit 12 selects the multimedia data with its related time information/location information matching with the time information or the location information, or the time information and the location information that are taken out by the index processing unit 11 in response to the retrieval request, among the multimedia data managed by the data management unit 13, and returns a set of the selected multimedia data as a retrieval result.

On other other hand, in the case of using either one of the time information and the location information, the basic operation of each constituent element of the multimedia data retrieval device 1 of Fig. 1 is as follows.

The data management unit 13 is managing the multimedia data in relation to the time information (or the location information).

The index processing unit 11 receives an input of a retrieval request given by one event name or a combination of a plurality of event names, and takes out the time information (or the location information) corresponding to the entered event names. The case where the input is a retrieval request given by a combination of a plurality of event names will be handled similarly as described above.

The data selection unit 12 selects the multimedia data with its related time information (or location information) matching with the time information (or the location information) that is taken out by the index processing unit 11 in response to the retrieval request, among the multimedia data managed by the data management unit 13. and returns a set of the selected multimedia data as a retrieval result.

It should be apparent that it is also possible to realize the case of using other information in addition to the time information, the case of using other information in addition to the location information, or the case of using other information in addition to the time information and the location information.

In the following, the case of using both the time information and the location information will be mainly described.

Now, as described above, the data management unit 13 of the multimedia data retrieval device of this embodiment manages each one of a plurality of retrieval target multimedia data in relation to either one or both of the time information and the location information.

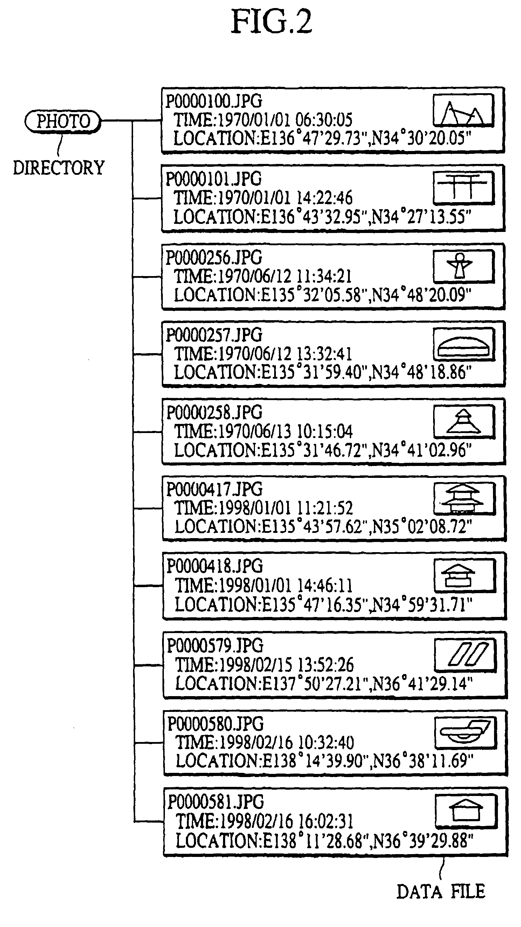

Fig. 2 shows one exemplary manner of realizing the multimedia data management at the data management unit 13 of the multimedia data retrieval device of this embodiment.

The example shown in Fig. 2 is directed to a scheme for utilizing the data formats in which the time information and the location information can be included. such as those disclosed in the "digital still camera image file format specification (Exif) Version 2.1" (JEIDA-49-1998) by Japan Electronics Industry Development Association, and "Recording-Helical-scan digital video cassette recording system using 6.35 mm magnetic tape for consumer use (525-80, 625-50, 1125-60 and 1250-50 systems)" by IEC (International Electrotechnical Commission).

In the example shown in Fig. 2, a plurality of digital photograph data that are recorded according to the data format as defined in the "digital still camera image file format specification (Exif) Version 2.1" are managed under a directory "PHOTO" in the file system, where "P0000100.JAG" to "P0000581.JPG" are files containing the digital photograph data. In each of these files, the information on a time at which this photograph is taken (denoted as "TIME:" in Fig. 2) and the information on longitude and latitude as the information on a location at which this photograph is taken (denoted as "LOCATION:" in Fig. 2) are recorded in addition to the still image data of the digital photograph. For example, the data file "P0000100.JPG" has a value "1970/01/01 06:30:05" as the time information and a value "E136°47'29.37", N34°30'20.05"" as the location information, which indicate that this is data of a photograph taken at 6:30:05 a.m. on January 1, 1970, at 136° 47' 29.37" of the east longitude and 34° 30' 20.05"" of the north latitude.

Although Fig. 2 shows an example for the digital photograph data, the image taking time and longitude and latitude of the image taking location for a video image can be recorded by using the data format disclosed in "Recording-Helical-scan digital video cassette recording system using 6.35 mm magnetic tape for consumer use (525-60, 625-50, 1125-60 and 1250-50 systems)" by IEC (International Electrotechnical Commission), for example. Note however that, in contrast to the still image produced by a digital camera (or a digital still camera) or the like where one set of the image taking time and the image taking location information is set in correspondence to one data, the moving pictures taken by a digital video camera may have more than one set of the image taking time and the image taking location information with respect to one data. Namely, there can be cases where a plurality of shots taken at different times and different locations coexist in one data.

It should be apparent to those skilled in the art that the present invention is equally applicable to digital photograph data or digital video data in any data formats other than the data formats described above.

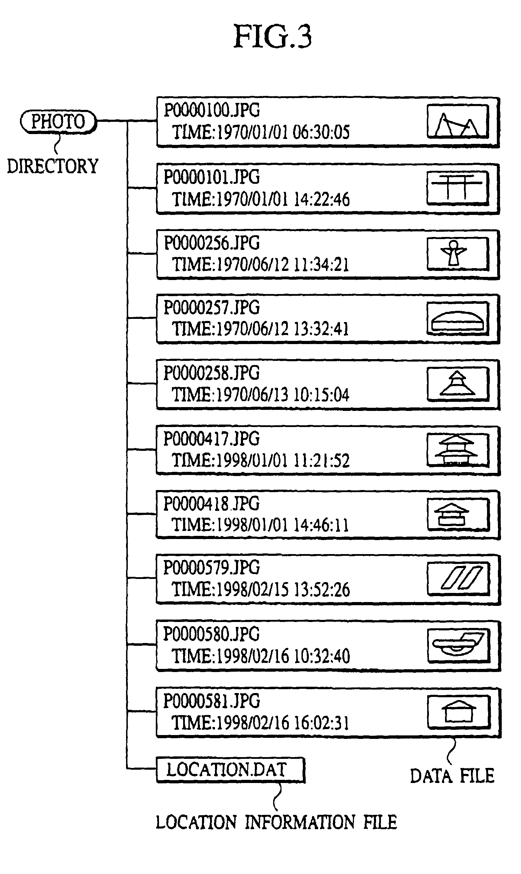

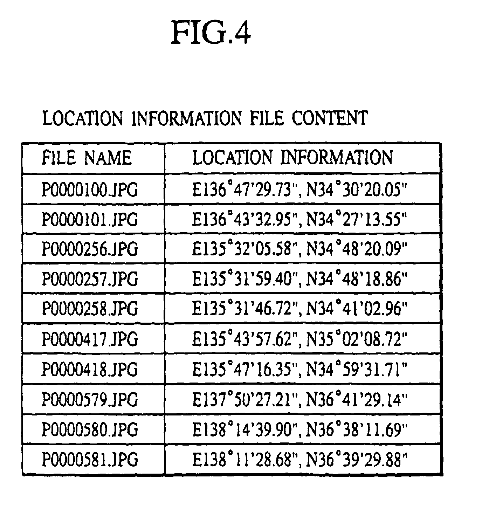

Fig. 3 and Fig. 4 show another exemplary manner of realizing the multimedia data management at the data management unit 13 of the multimedia data retrieval device of this embodiment, where Fig. 4 shows an exemplary content of the location information file "LOCATION.DAT" appearing in Fig. 3.

The example shown in Fig. 3 and Fig. 4 is directed to a scheme in which each management target data has only the time information, and a correspondence between each data and its location information is separately managed by using a file, a database management system, or the like.

In the example shown in Fig. 3 and Fig. 4, ten digital photograph data from "P0000100.JPG" to "P0000581.JPG" are managed under a directory "PHOTO", where each data also records a time it was taken as the time information. Here, the data format according to Exif Version 2.1 described above can be used as the data format for the digital photograph data. Separately from these digital photograph data, a correspondence between each photograph and the location information indicating a location where it was taken is recorded and managed in the location information file. In the example shown in Fig. 3 and Fig. 4, the location information file has a file name "LOCATION.DAT". In this "LOCATION.DAT", as shown in Fig. 4, a value "E136°47'29.37". N34°30'20.05"" indicating 136° 47' 29.37" of the east longitude and 34° 30' 20.05"" of the north latitude is set in correspondence to the file name "P0000100.JPG" as the location information of the digital photograph data recorded in the file with the file name "P0000100.JPG", for example.

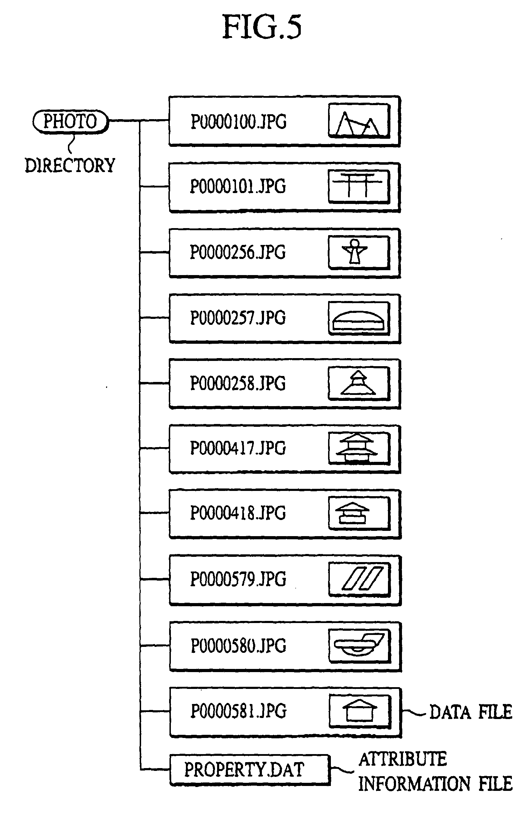

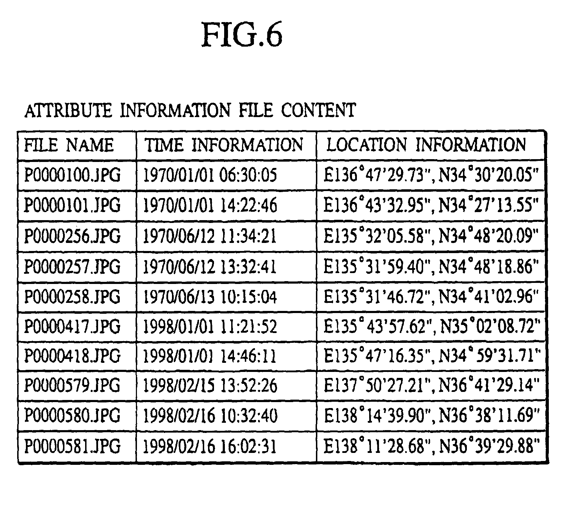

Fig. 5 and Fig. 6 show still another exemplary manner of realizing the multimedia data management at the data management unit 13 of the multimedia data retrieval device of this embodiment, where Fig. 6 shows an exemplary content of the attribute information file "PROPERTY.DAT" appearing in Fig. 5.

The example shown in Fig. 5 and Fig. 6 is directed to a scheme in which each management target data has neither the time information nor the location information, and a correspondence between each data and its time information and location information is separately managed by using a file, a database management system, or the like.

In the example shown in Fig. 5 and Fig. 6, ten digital photograph data from "P0000100.JPG" to "P0000581.JPG" are managed under a directory "PHOTO", where each data has neither the time information nor the location information. Separately from these digital photograph data, a correspondence between each photograph and its time information and location information is recorded and managed in the attribute information file. In the example shown in Fig. 5 and Fig. 6, the attribute information file has a file name "PROPERTY.DAT". In this "PROPERTY.DAT", as shown in Fig. 6, a value "1970/01/01 06:30:05" indicating 6:30:05 a.m. on January 1, 1970 and a value "E136°47'29.37", N34°30'20.05"" indicating 136° 47' 29.37" of the east longitude and 34° 30' 20.05"" of the north latitude are set in correspondence to the file name "P0000100.JPG" as the time information and location information of the digital photograph data recorded in the file with the file name "P0000100.JPG". for example.

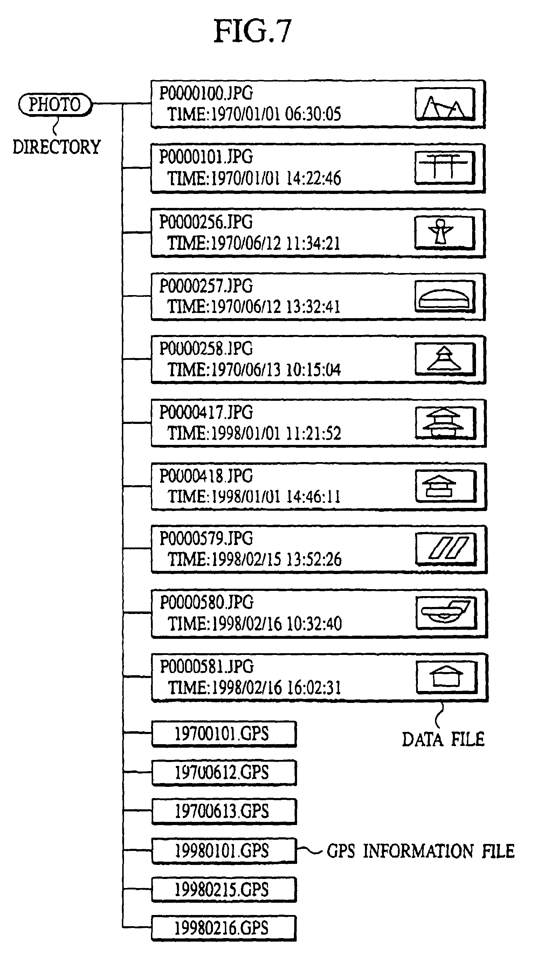

Fig. 7 shows yet another exemplary manner of realizing the multimedia data management at the data management unit 13 of the multimedia data retrieval device of this embodiment.

The example shown in Fig. 7 is directed to a scheme in which each management target data has only the time information, and the location information is obtained by utilizing GPS data.

In the example shown in Fig. 7, ten digital photograph data from "P0000100.JAG" to "P0000581.JPG" are managed under a directory "PHOTO", where each data has the time information but no location information. Separately from these digital photograph data, the GPS data obtained at a time of taking each photograph is managed. In the example shown in Fig. 7, the GPS data for one day is managed as one file, such that a file "19700101.GPS" indicates the GPS data of January 1, 1970, a file "19700612.GPS" indicates the GPS data of June 12, 1970, and so on. In each of these GPS information files, a correspondence table indicating longitude and latitude corresponding to each timing at a prescribed time interval is recorded.

By using this GPS information, when the location information of "P0000100.JPG" is necessary, the corresponding GPS information file "19700101.GAS" is selected according to the time information of "P0000100.JPG" and the location information estimated from the time 6:30:05 a.m. is obtained from that information. for example. Here, the GPS information is recorded only at a prescribed time interval (i.e., only discretely), so that it is rare to find the location information exactly corresponding to the desired time. For this reason, the location information for a time closest to the desired time, or the location information calculated by interpolating the location information before and after the desired time can be used.

Note that various methods described above are for the case where there are two types of attribute information to be related to the multimedia data, but the similar methods can be used for the case where there is only one type of attribution information or the case where there are three or more types of attribution information.

In any of the methods for realizing the multimedia data management at the data management unit 13 described with references to Fig. 2, Figs. 3 and 4, Figs. 5 and 6, and Fig. 7, all the photograph data files are managed under a single directory called "PHOTO". These management methods can be easily used in combination with the conventionally known management method for enabling the retrieval using keywords or the conventionally known classification method using directories.

It is also possible to manage the multimedia data managed by the data management unit 13 by another computer by utilizing a mechanism for accessing files or data through a network such as a remote file system, instead of the method for managing them within the multimedia data retrieval device 1 as described above.

Now, the multimedia data retrieval device of this embodiment starts its operation upon receiving the retrieval request at the index processing unit 11. The retrieval request can be issued by the user to the multimedia data retrieval device 1 directly, by a front-end program that interfaces between the user and the multimedia data retrieval device 1, or by various application programs.

The retrieval request is given to the index processing unit 11 in a form of a single event name or a combination of a plurality of event names.

For example, an event name "Shinshu" becomes the retrieval request when it is desired to retrieve photograph data taken at Shinsbu, an event name "Nagano Olympics" becomes the retrieval request when it is desired to retrieve photograph data taken during a trip to see the Nagano Olympics, and an event name "New year's day" becomes the retrieval request when it is desired to retrieve photograph data taken at the new year's day.

The retrieval condition that cannot be expressed by a single event name can be specified by combining event names. For example, the retrieval request "New year's day in Kyoto" in which an event name "Kyoto" representing a location and an event name "New year's day" representing a time are combined can be used as the retrieval request for photograph data taken at the new year's day in Kyoto. It is also possible to narrow down the retrieval condition further as in the case of "New year's day of 1970 in Kyoto". It should be clearly understood that the above description is not intended to exclude a combination of basic event names as an event name, and it is possible to provide a single event name such as "New year's day in Kyoto".

As other examples, it is also possible to carry out the retrieval by specifying only the location information in a form of "event name + its location" or by specifying only the time information in a form of "event name + its time". For example, the event name "Nagano Olympics" would be the retrieval request specifying both the time information and the location information, but it is also possible to carry out the retrieval by specifying only the location information by using "a location of Nagano Olympics", or by specifying only the time information by using "a time of Nagano Olympics". It is also possible to narrow down the retrieval condition further by using "event name its time + event name" such as "Sapporo at a time of Nagano Olympics"

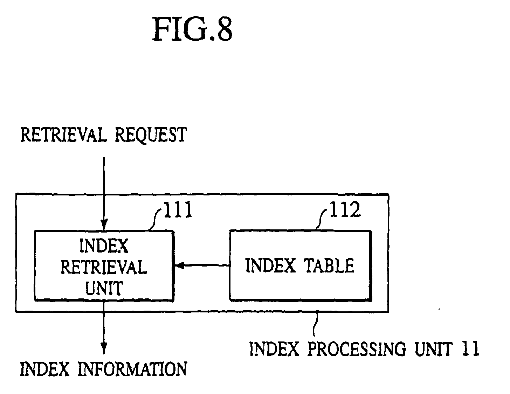

Fig. 8 shows an exemplary configuration of the index processing unit 11 in the multimedia data retrieval device of this embodiment.

As shown in Fig. 8, the index processing unit 11 comprises an index retrieval unit 111 and an index table 112.

The index retrieval unit 111 first receives a single event name or a combination of a plurality of event names as the retrieval request, and obtains the time information and the location information corresponding to each event name contained in the retrieval request by looking up the index table 112.

Next, the index retrieval unit 111 gives the obtained time information and/or location information if the retrieval condition is a single event name, or the time information and/or location information after calculating a combination of all the obtained time information and/or location information corresponding to respective event names if the retrieval condition is a combination of a plurality of event names, as the index information to the data selection unit 12.

The index table 112 is a table for managing a correspondence between each event name and n types of attribute information its has. Note that there can be cases where one item exists with respect to one type of attribute information and cases where a plurality of items exist with respect to one type of attribute information (at least two items for the start time and the end time will be necessary in the case of expressing the time information as a period of time, for example).

The index table in this embodiment is a table for managing either one or both of the correspondence between the event name and its time information and the correspondence between the event name and its location information.

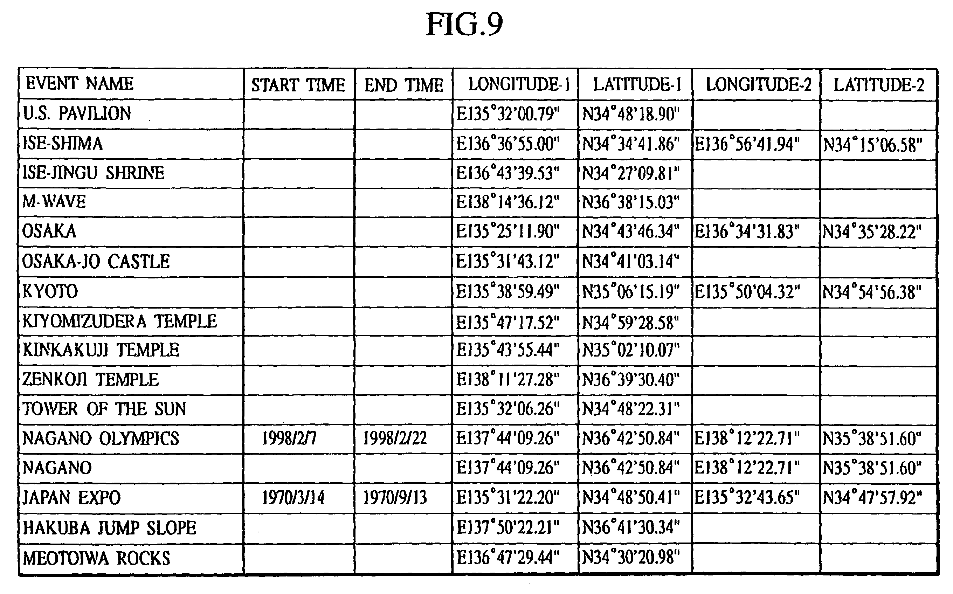

Fig. 9 shows an example of the index table 112. In this example of the index table 112, "start time" and "end time" as the time information and "longitude-1", "latitude-1", "longitude-2" and "latitude-2" as the location information are managed in correspondence to each event name. For example, the event name "Osaka-jo castle" has no corresponding time information but has "longitude-1" and "latitude-1" of a representative point as the location information.

In the case of expressing the location information by a representative point, there is an ambiguity regarding an extent of a range centered around that point which is intended to be indicated by that event name. For this reason, an effective radius distance from the representative point may be recorded together in the index table. When the radius is not explicitly recorded (or in the case of not adopting the method for recording the radius explicitly), an effective radius distance from the representative point may be set according to appropriate criteria at the data selection unit 12, for example. Note that it is also possible to specify the location information by specifying a representative line rather than a representative point. Even in this case, the judgement as to how far from that line is intended to be belonging to that event can be made similarly as in the case of the representative point, by recording that distance together in the index table or by setting an effective distance according to appropriate criteria at the data selection unit 12.

Also, in the index table 112 of Fig. 9, the event name "Kyoto" has the location information given by the longitude-1 "E135°38'59.49"", the latitude-1 "N35°08'15.19"", the longitude-2 "E135°50'04.32"". and the latitude-2 "N34°54'56.38"". Here, the location information of a region indicated by the event name "Kyoto" is expressed in approximation by a rectangle with two diagonal corners specified by these longitude and latitude values on a plane.

As a method for specifying the location information, besides the method for specifying a rectangular region as in the example of Fig. 9, there is also a method for using a polygon that approximates the actual region more accurately. There is also a method for expressing the location information by a set of a plurality of points or regions.

In the index table 112 of Fig. 9, the event name "Japan EXPO" has the start time "1970/3/14" and the end time "1970/9/13" as the time information. and the longitude-1 "E135°31'22.20"", the latitude-1 "N34°48'50.41"", the longitude-2 "E135°32'43.65"", and the latitude-2 "N34°47'57.92"" as the location information. Depending on the type of the event or the needs, the time information may be specified in further detail by specifying the hour as well, or more coarsely by specifying only the year.

The time information or the location information may be directed specified as the event names for specifying the retrieval request, in which case there is no need to look up the index table. For example, "1970" can be specified to indicate a whole year of 1970 as the time specification of the retrieval request, or the longitude and latitude values can be directly specified to indicate the location specification of the retrieval request. This way of specifying the retrieval request can be used effectively in the case of combining the event names. For example, the retrieval request "Kyoto in 1970" can be used to retrieve photographs taken at Kyoto in 1970.

Note that the example of the index table 112 shown in Fig. 9 records only events related to the digital photograph data used in the example shown in Fig. 2, but this is only a simplification for the purpose of explanation, and many more events can be registered in the index table in practice.

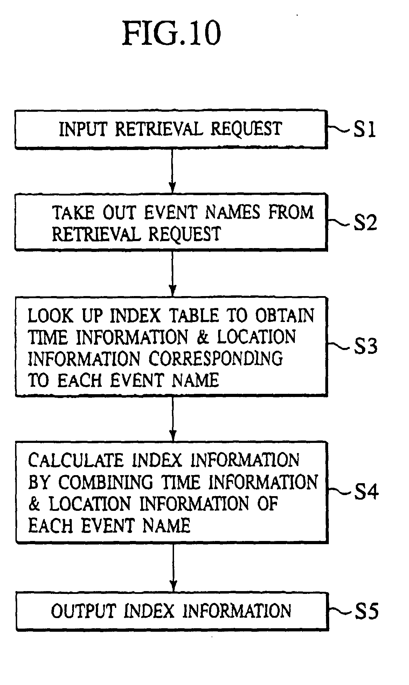

The index retrieval unit 111 of the index processing unit 11 in the multimedia data retrieval device 1 of this embodiment operates according to a procedure shown in Fig. 10, for example.

The index retrieval unit 111 first receives the retrieval request (step S1), and next takes out the event names contained in that retrieval request (step S2). Then, the index retrieval unit 111 looks up the index table 112 using the taken out event names as keys, and obtain the time information and/or the location information corresponding to each event name (step S3).

Next, the index retrieval unit 111 calculates the index information indicating the time information and/or the location information of the retrieval target according to a way of combining the event names as indicated by the retrieval request, based on the time information and/or the location information so obtained (step S4).

The index retrieval unit 111 then gives the index information indicating the time information and/or the location information of the retrieval target so obtained (depending on the event names contained in the retrieval request, there can be cases where the time information exists but the location information does not exist, cases where the location information exists but the time information does not exist, and cases where both the time information and the location information exist) to the data selection unit 12 (step S5).

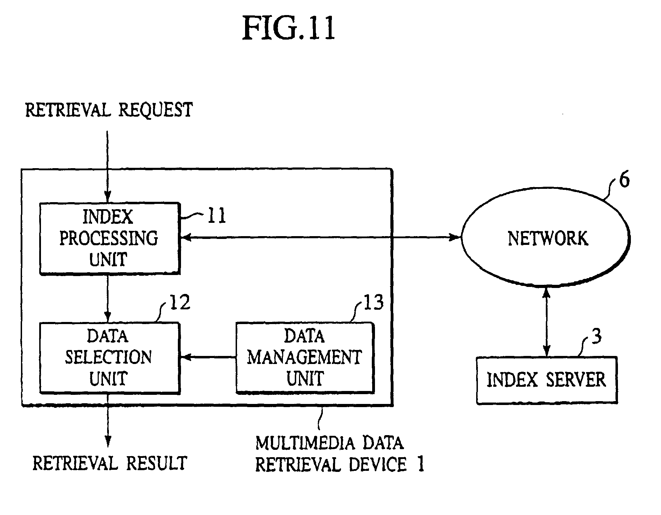

Now, in the configuration of the index processing unit 11 described above, the index processing unit 11 locally possesses the index retrieval unit 111 and the index table 112 therein. As another exemplary configuration of the multimedia data retrieval device 1, it is also possible to use the configuration as shown in Fig. 11 in which the index processing unit 11 carries out the processing using a remote index server 3 which is connected with the multimedia data retrieval device 1 through a network 6 such as the Internet or an intranet.

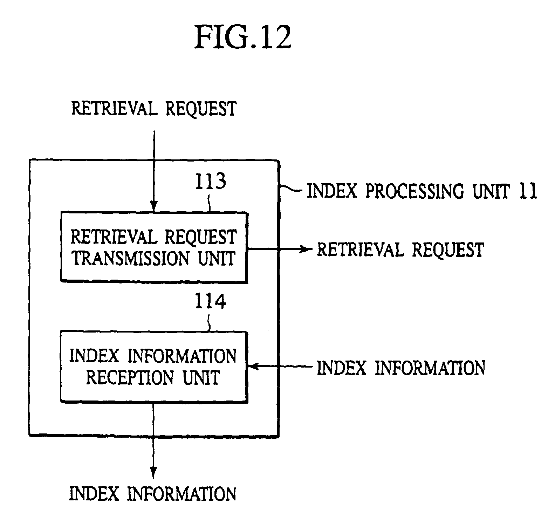

Fig. 12 shows an exemplary configuration of the index processing unit 11 in this case. As shown in Fig. 12, the index processing unit 11 in this case has a retrieval request transmission unit 113 for sending the received retrieval request to the index server 3, and an index information reception unit 114 for receiving the index information obtained at the index server 3 according to this retrieval request and giving it to the data selection unit 12.

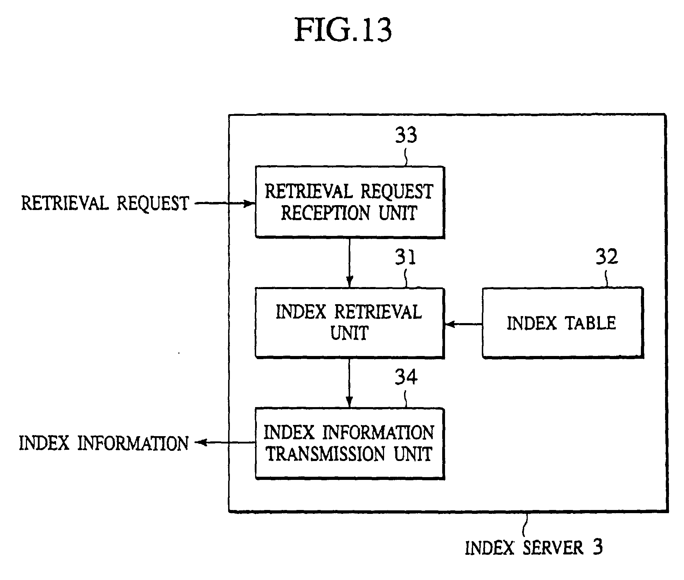

Fig. 13 shows an exemplary configuration of the index server 3 in this case. As shown in Fig. 13, the index server 3 in this case has a retrieval request reception unit 33 for receiving the retrieval request through the network 6 such as the Internet. an index table 32 for managing event names and their corresponding time information and location information, an index retrieval unit 31 for obtaining the index information from the retrieval request by referring to the index table 32, and an index information transmission unit 34 for returning the obtained index information. The index retrieval unit 31 and the index table 32 can be formed to operate similarly as those of the index processing unit 11 for carrying out the processing locally as shown in the examples of Fig. 9 and Fig. 10.

In the case of using the index server 3, it is also possible to use a configuration in which the calculation (regarding the time information and the location information) that is to be carried out when the retrieval request is specified by a combination of a plurality of event names will be carried out at the index processing unit 11 side in the multimedia data retrieval device 1 rather than at the index server 3 side tin which case, the time information and/or the location information corresponding to each event name can be directly returned from the index server 3 to the multimedia data retrieval device 1). This method can be utilized effectively in the case of using a plurality of index servers 3 in combination or in the case of using the local index table 112 and the index server 3 in combination as will be described below.

The advantage of the index processing unit 11 which has the index table locally is that there is no need for the multimedia data retrieval device 1 to have a communication function. However, there is a need to add new events into the index table by some mechanism. For example, new events can be delivered by using a floppy disk or a CD-ROM, or through the Internet or broadcast signals.

The advantage of the index processing unit 11 that uses the index server 3 is that there is no need for the index processing unit 11 to carry out the maintenance of the index table such as addition of new events. When the new events are added at the index server 3, these new events can be utilized without requiring any special operation. Moreover, the index server 3 is connected to the network 8 so that a plurality of multimedia data retrieval devices 1 that are connected to the same network 6 can share the single index server 3.

As another way of using the index server 3, the data of the index table 32 in the index server 3 can be cached in the multimedia data retrieval device 1. Namely, the data of the event matching with the time information and the location information of the multimedia data such as photograph that is managed by the data management unit 13 of the multimedia data retrieval device 1 can be prefetched from the index server 3 and stored in the local index table 112 in advance, or the event data read out from the index server 3 and used once can be cached in the local index table 112. In the subsequent retrieval request processing, the index information can be obtained by using only the information of the local index table 112 whenever it is possible. A range of event data to be cached or prefetched can be determined in various ways. For example, it is possible to use a variety of criteria such as what are to be cached or prefetched are all data in the relevant range. only those data that are used recently, only those data of a location at which many photographs are taken, only those data that are looked up frequently, etc.

Moreover, it is also possible to provide a plurality of index servers 3 and switch the index server to be used among them according to the need, or use information of a plurality of index servers in combination.

For example, by providing a plurality of index servers having the same index table, it is possible to distribute the processing load among the index servers, or it is possible to improve the reliability by making another index server available at a time of a trouble in one index server. Also, by providing a plurality of index servers having different event data, the index server to be used can be switched according to the need. Also, by providing a plurality of index server having information at different levels, such as an index server having information at the world level, an index server having information at Japan level, an index server having information at Kanagawa prefecture level, and so on. for example, it is possible to carry out the retrieval by using a plurality of index servers ranging from a lower level to a higher level, and calculates the index information corresponding to the retrieval request by combining the index information obtained from these index servers.

Also, the exemplary configurations of the index retrieval unit (multimedia data retrieval device) shown in Fig. 8 or the index retrieval unit (index server) shown in Fig. 13, the index retrieval unit looks up only one index table, but it is also possible to divide the index table into a plurality of tables.

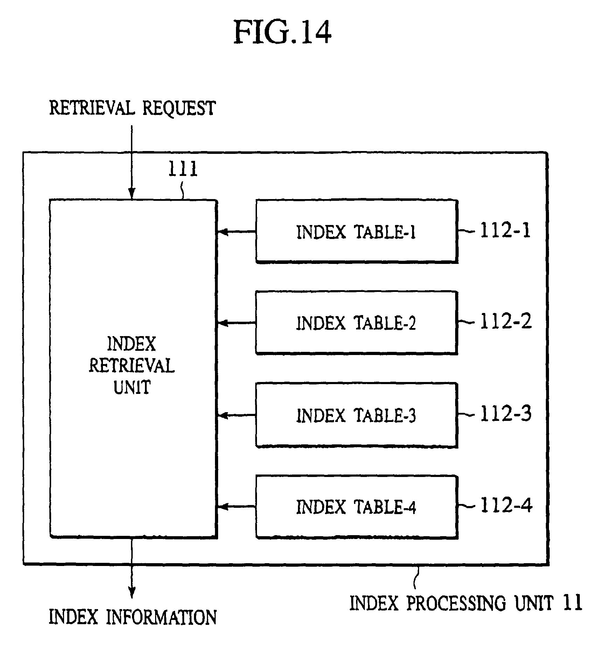

Fig. 14 shows an exemplary configuration in which the index processing unit 11 of Fig. 8 has a plurality of index tables. In the example of Fig. 14, four index tables 112-1 to 112-4 are provided.

As a manner of using such a plurality of index tables, the events can be classified into a plurality of fields and recorded into separate index tables such that it becomes easier to manage the index tables.

As another manner of using such a plurality of index tables, in Fig. 14, the index table-1 112-1 can be designated as an index table to be shared by a plurality of users, the index table-2 112-2, the index table-3 112-3 and the index table-4 112-4 can be designated as index tables for recording events for respective different users, for example. In this way, it becomes possible to use the most appropriate index tables according to the users, as in the case where one user uses the index table-1 112-1 and the index table-2 112-2, another user uses the index table-1 112-1 and the index table 112-3, and still another user uses the index table-1 112-1 and the index table 112-4. In this case, the user specific index table can be used to record the personal events, or can be used to record events to be shared among a group of users who have the common interest in a particular field.

More generally, the index retrieval unit 111 can be configured to use a necessary number of index tables to be shared, index tables for user groups, and personal index tables in combination.

It should be apparent that the index retrieval unit with a plurality of index tables as shown in the example of Fig. 14 can be applied similarly to the index retrieval unit 31 of the index server shown in Fig. 13.

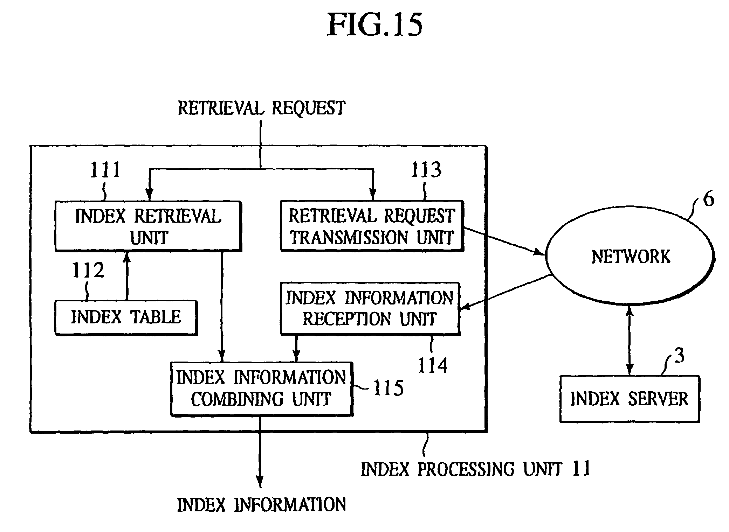

Next, Fig. 15 shows another exemplary configuration of the multimedia data retrieval device 1 in which the index processing unit 11 that has the local index table 112 as shown in Fig. 8 and the remote index server 3 as shown in Fig. 13 are used in combination.

When the retrieval request is received, the index processing unit 11 of this example gives the retrieval request to both the local index retrieval unit 111 and the retrieval request transmission unit 113.

The retrieval request transmission unit 113 sends the retrieval request to the index server 3 through the network 6, and the index information reception unit 114 receives the index information retrieved by the index server 3 and gives it to an index information combining unit 115. Here, in the case where the retrieval request is specified by a combination of a plurality of event names, the index server 3 may be configured to retrieve the time information and/or the location information corresponding to each event name and return them as they are or the index server 3 may be configured to calculate a combination of the time information and/or the location information for a plurality of events and return the calculated combination.

Upon receiving the retrieval request, the index retrieval unit 111 retrieves the time information and/or the location information corresponding to each event specified in the retrieval request by looking up the local index table 112, and gives them to the index information combining unit 115. Here, in the case where the retrieval request is specified by a combination of a plurality of event names, the index retrieval unit 111 may be configured to retrieve the time information and/or the location information corresponding to each event name and return them as they are to the index information combining unit 115, or the index retrieval unit 111 may be configured to calculate a combination of the time information and/or the location information for a plurality of events and return the calculated combination to the index information combining unit 115.

Note that, in the case where the time information and/or the location information corresponding to all the events specified in the retrieval request cannot be obtained by the remote index server 3 or the local index retrieval unit 111 alone, the time information and/or the location information of those events that can be obtained by the remote index server 3 or the local index retrieval unit 111 alone are obtained and given to the index information combining unit 115.

The index information combining unit 115 calculates the time information, or the location information, or the time information and the location information of the retrieval target corresponding to the retrieval request by combining the information given from the index retrieval unit 111 and the index information reception unit 114, and gives it to the data selection unit 12 as the index information.

This method for using the local index table in the multimedia data retrieval device and the index table of the index server side in combination is effective in the case of carrying out the retrieval using the personal event names and the general event names mixedly.

For example, in the case of looking for a photograph taken at a time of dining at the xx hotel on the daughter's birthday, the location information corresponding to the event name "xx hotel" can be retrieved by the index server 3. but the personal information such as "daughter's birthday" cannot be retrieved by the index server 3 which is shared by a plurality of users. For this reason, the time information of the birthday is registered under the event name of "daughter's birthday" in the local personal index table 112 in the multimedia data retrieval device 1, such that it becomes possible to carry out the retrieval by combining this information with the information obtained by the index server 3. In this way, it becomes possible to carry out the retrieval using a combination of the general event name registered in the index server 3 and the personal event name registered in the local index table 112 such as "daughter's birthday at the xx hotel", for example (where the location information of the "xx hotel" is obtained from the index server 3 and the time information of the "daughter's birthday" is obtained from the local index table 112).

Note that the method for providing the personal index table 112 locally in the multimedia data retrieval device 1 is described above, but it is also possible to provide the personal index table at the index server 3 side such that the index server 3 carries out the processing by combining the personal index table and the general common index table.

It should be apparent that, similarly as the multimedia data retrieval device 1 having a local index table as shown in Fig. 8 can also utilize the remote index server in combination, the index server 3 having a local index table as shown in Fig. 13 can also utilize the other index servers in combination.

Here, it is also possible to use the personal schedule data as the personal index table. For example, the electronic schedule pad managed by a computer can record personal schedules in units of day or hour. By utilizing this information, the registered schedules can be taken as the event names such that, when such an event name is specified in the retrieval request, the date and time of the corresponding schedule are taken out as the time information and used in calculating the index information. In this way, when a schedule "branch manager meeting" is registered in the schedule pad and the retrieval request "the branch manager meeting held at the industry hall" is entered, for example, the index information can be calculated by combining the location information of the industry hall obtained at the index server and the time information of the branch manager meeting obtained from the schedule pad. As a method for converting data of the schedule pad into data of the index table, the data can be collectively converted at appropriate timing from the schedule pad to the index table, or the schedule pad can be directly referred at a time of processing the retrieval request.

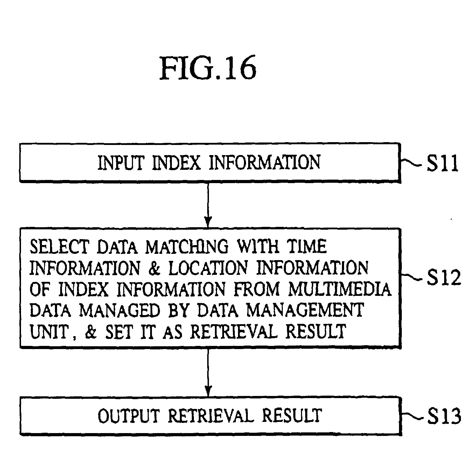

When the index information is obtained at the index processing unit 11 of the multimedia data retrieval device of this embodiment, the index information is given to the data selection unit 12 (see Fig. 1). The data selection unit 12 then operates according to a procedure shown in Fig. 16, for example.

Namely, the data selection unit 12 first receives the index information from the index processing unit 11 (step S11). Then, the data selection unit 12 selects those multimedia data that match the time information and/or the location information (there can be cases where there is only the time information, cases where there is only the location information, and cases where there are both the time information and the location information) specified by the index information, among the multimedia data managed by the data management unit 13 (step S12), and outputs the selected multimedia data as the retrieval result (step S13).

At a time of selecting the multimedia data that match the time information and the location information specified by the index information (or at a time of selecting the multimedia data that match the location information specified by the index information), there can be cases where the location information in the index information only specify the representative point without specifying a radius as already mentioned above. The data selection unit 12 can be configured to use a prescribed distance as the radius in such a case or to determine the radius according to the number of multimedia data that can be displayed on the screen simultaneously in such a case if a front-end program using GUI (Graphical User Interface) is used.

It is also possible to configure the data selection unit 12 such that the retrieval result not only contains the multimedia data that match the time information, or the location information, or the time information and the location information specified by the index information as described above, but also those multimedia data which do not match exactly but close to the time information or the location information specified by the index information. This method is particularly effective in the case of carrying out the retrieval through the front-end program using GUI.

Namely, in the case of displaying the corresponding photographs on the screen in response to the retrieval request, if there are photographs that are not corresponding to the retrieval request but are taken at nearby locations or at similar times, such photographs can be also displayed together such that it becomes possible to easily enhance, narrow, or change the retrieval targets by using them as keys. In this case, it is preferable to change the manner of display between the corresponding photographs and the non-corresponding photographs taken at the nearby locations or similar times.

Note that the processing of the data selection unit 12 can be made faster by devising the data structure such as the use of the B-TREE data structure or the like in order to look up the target data from the time information and/or the location information.

It is also possible to classify the multimedia data managed by the data management unit 13 into groups, and specify the target group at a time of selecting the multimedia data at the data selection unit 12. For example, marks such as "secret photo", "recommended photo", "bad photo", etc. can be attached to the multimedia data managed by the data management unit 13, such that the photograph data are retrieved from a set of photograph data to which the "recommended photo" mark is attached at a time of showing photographs to the others, or the photograph data are retrieved also from a set of photograph data to which the "secret photo" mark is attached at a time of showing photographs to intimate friends.

In the embodiment described up to this point, when the retrieval request is specified by a combination of event names, the result of calculating a combination of the time information and the location information at the index retrieval unit 111 in the index processing unit 11 is given to the data selection unit 12 as the index information. Alternatively, it is also possible to obtain the time information and the location information for the individual event at the index processing unit 11 and give them as they are to the data selection unit 12. In such a case, the data selection unit 12 calculates the time information and the location information of the retrieval target from the time information and the location information for a plurality of events.

Next, the exemplary case of realizing the multimedia data retrieval device of this embodiment by utilizing a front-end program using GUI will be described.

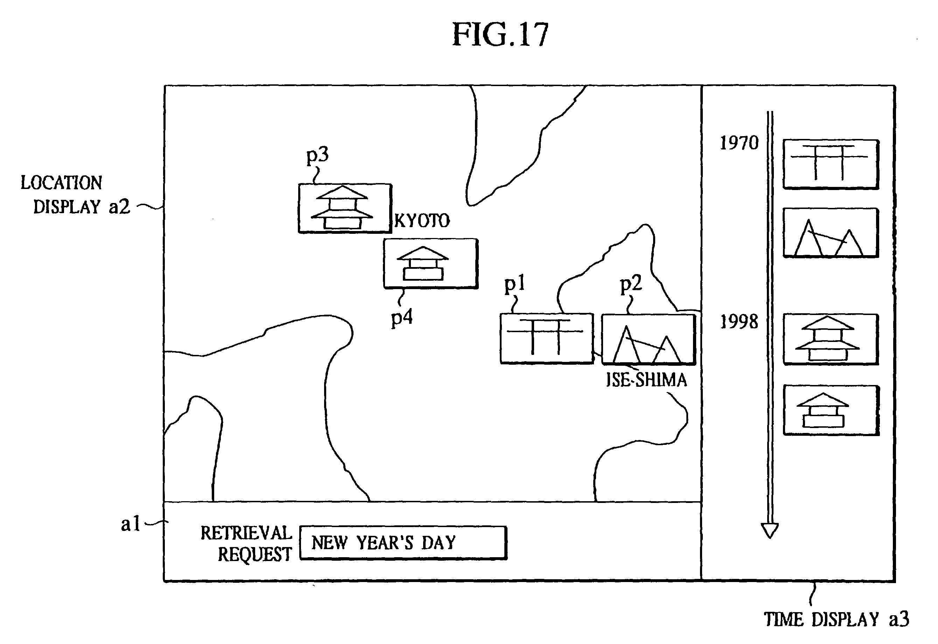

Fig. 17 shows an exemplary display screen of the GUI provided in the multimedia data retrieval device of this embodiment.

In the exemplary GUI display screen shown in Fig. 17. the screen is largely divided into three regions.

A lower left region a1 is a region for entering the retrieval request, and Fig. 17 shows an exemplary case where the retrieval is carried out by specifying an event name "New year's day" as the retrieval request.

An upper left region a2 is a region for displaying locations, in which the multimedia data of the retrieval result are displayed at corresponding locations. Here, the digital photographs of the retrieval result are displayed in formed of thumb-nail images p1 to p4. In this location display region, it is possible to display the retrieval result in superposition to the displayed map data, and it is possible to use a more simplified sketch map. It is also possible to display the retrieval result by using more simple coordinate blocks. It is obviously also possible to display the retrieval result alone by accounting for the relationship among the locations. without displaying anything on the background.

A right region a3 of the screen is a region for displaying times. The retrieved multimedia data are displayed along a time axis, using the thumb-nail images or the like.

Note that the GUI display screen can be further equipped with various controls such as a retrieval button, a scroll bar, check boxes and option buttons according to the needs, but their description will be omitted here.

Now, the example of Fig. 17 shows a result of the retrieval using the index table of Fig. 9 from the digital photograph data shown in Fig. 2, in response to the retrieval request given by an event name "New year's day". From this retrieval result, it can be seen that there are photographs taken during a trip to Ise-shima on the new yea's day of 1970 and photographs taken during a trip to Kyoto on the new year's day of 1998 in this example.

Here, this retrieval result can be further narrowed down to just the photographs of Kyoto, for example.

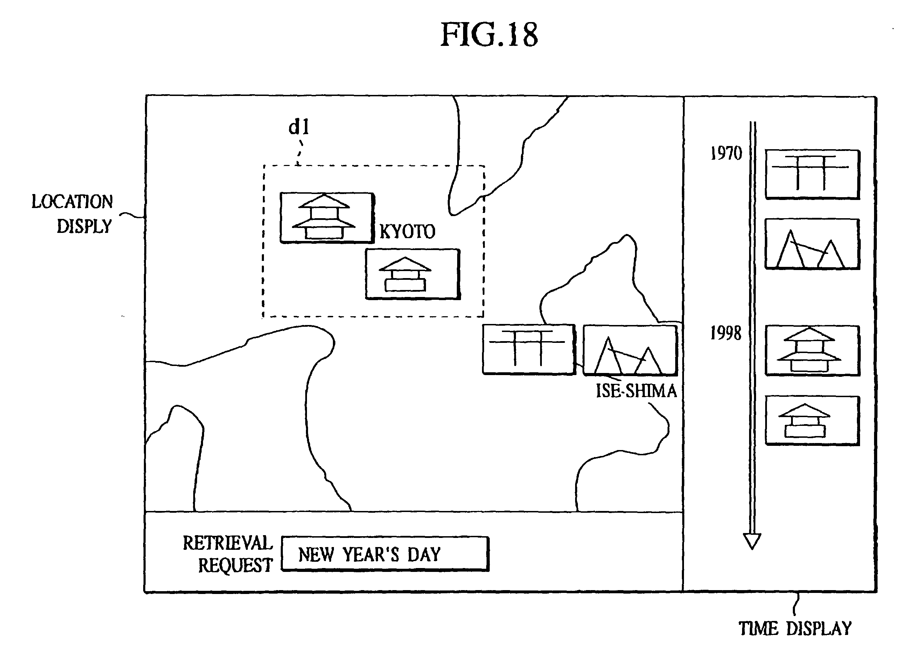

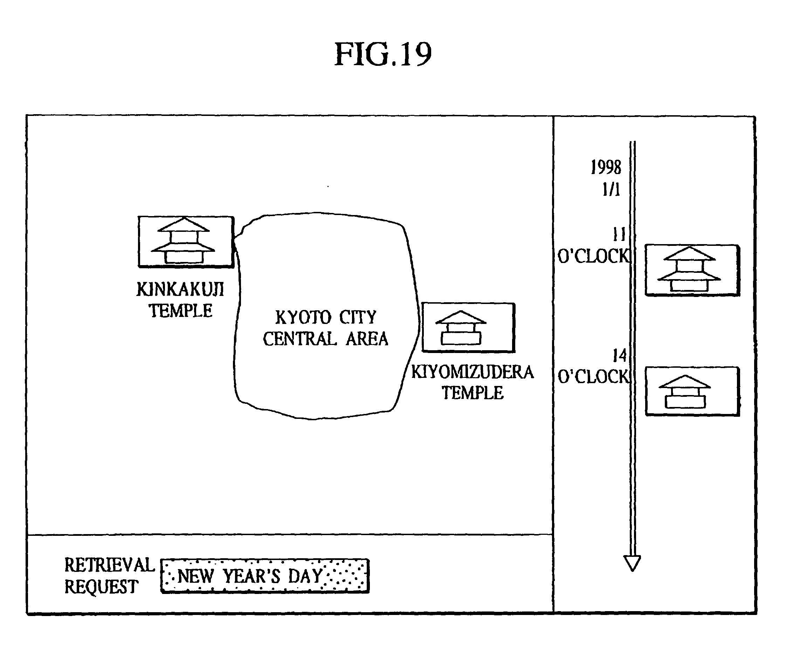

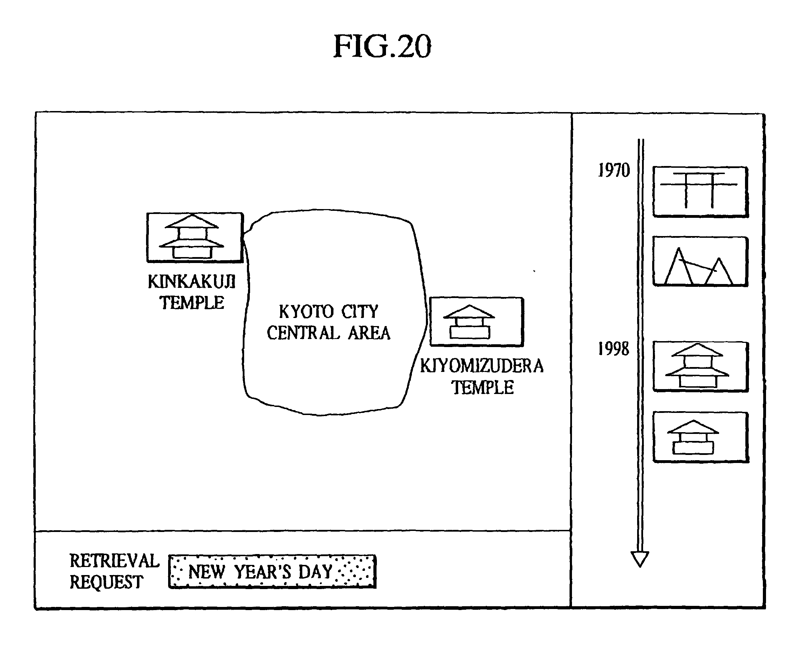

One method for narrowing down the retrieval result is to select and specify a portion of Kyoto in the location display region using a pointer such as a mouse, as shown in Fig. 18. In Fig. 18, a dashed line rectangle d1 indicates a region selected by a mouse. When such a selection is made, the selected portion will be displayed as shown in Fig. 19. Here, the time display is also narrowed down to a portion of the photographs of Kyoto in synchronization, but it is also possible to maintain the time display unchanged as shown in Fig. 20. At this point, the manner of display of the retrieval request field can be changed to indicate that the currently displayed retrieval result does not match this retrieval request (it is not a display of the retrieval result obtained by using this event name), for the convenience of the user, as shown in Fig. 19 and fig. 20.

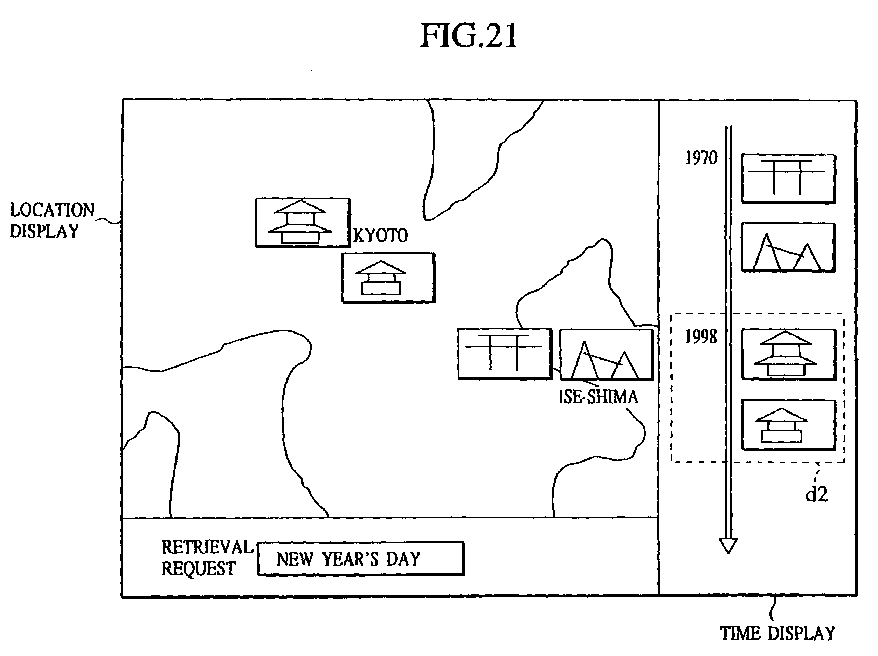

Another method for narrowing down the retrieval result is to select and specify a portion of 1998 on which a trip to Kyoto was made, in the time display region using a pointer such as a mouse, as shown in Fig. 21. In Fig. 21, a dashed line rectangle d2 indicates a region selected by a mouse. When such a selection is made, the selected portion will be displayed as shown in Fig. 19. Here, the location display is also narrowed down to a portion of the photographs of Kyoto in synchronization, but it is also possible to maintain the location display unchanged. At this point, the manner of display of the retrieval request field can be changed to indicate that the currently displayed retrieval result does not match this retrieval request for the convenience of the user, as shown in Fig. 19 and fig. 20.

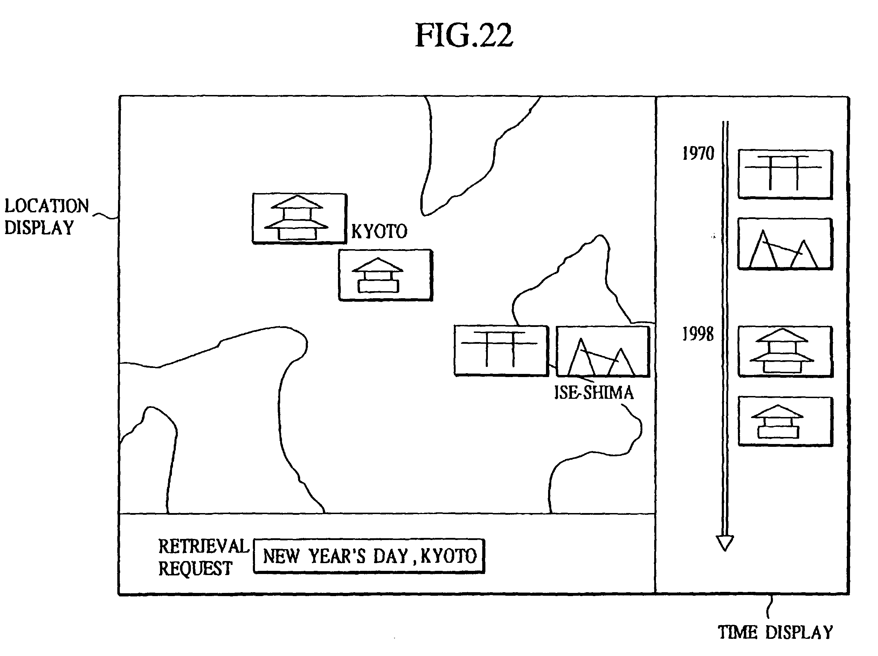

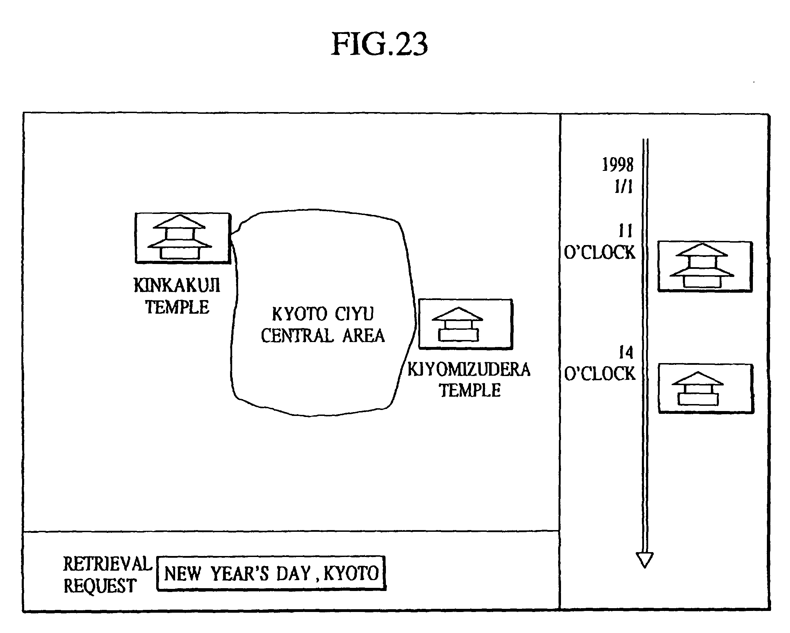

Still another method for narrowing down the retrieval result is to carry out the incremental retrieval by adding a new event name "Kyoto" in the retrieval request as shown in Fig. 22. When such an incremental retrieval is carried out, the selected portion will be displayed as shown in Fig. 23. Here, the location display and the time display are also narrowed down to a portion of the photographs of Kyoto in synchronization, but it is also possible to maintain the location display and the time display unchanged.

It is also possible to directly specify the time information such as "1998" in the retrieval request instead of the event name such as "New year's day". By utilizing this function, it is also possible to realize the same narrowing down as shown in Fig. 22 by using a combination of "New year's day" and "1998".

Note that the multimedia data retrieval device that is convenient for the users to carry out the retrieval can be realized by combining these methods for narrowing down the retrieval result with a vicinity retrieval to be described below and/or a reverse look-up retrieval to be described below.

Now, in the examples of Fig. 17 to Fig. 23, the thumb-nail images are used for the retrieval result displayed in the location display region and in the time display region, so as to make a correspondence between these two regions more easily comprehensible. Besides that, it is also possible to display the retrieval result while making a correspondence between these two regions more easily comprehensible by various methods including a method for using different colors or various marks (such as circle. triangle and square marks, or spade, heart, diamond and club marks, etc.), a method for displaying lines connecting between them, and a method for displaying a part of one region in highlight in response to an operation made in another region.

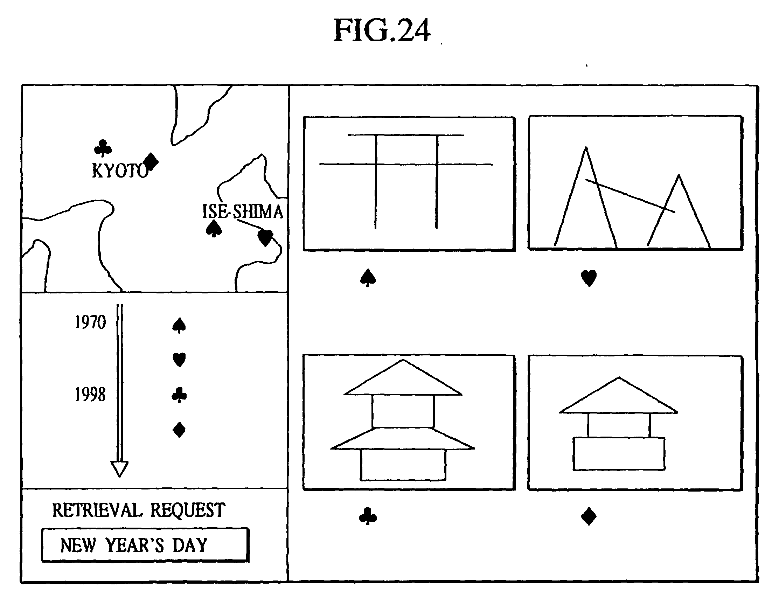

Fig. 24 shows an exemplary display screen of a front-end program that is capable of displaying a photograph in an enlarged form on the screen and displaying many photographs on the screen simultaneously. In this example, the same retrieval result as in the example of Fig. 17 is displayed, but the location display region, the time display region and the retrieval request region are put in smaller sizes and collected to the left side, while a large region for displaying photographs is provided on the right side. The correspondences between the photographs and their location information and time information are indicated by using marks. Namely, the marks appearing below the photographs are displayed at the corresponding positions in the location display region and the time display region so as to indicate the correspondences.

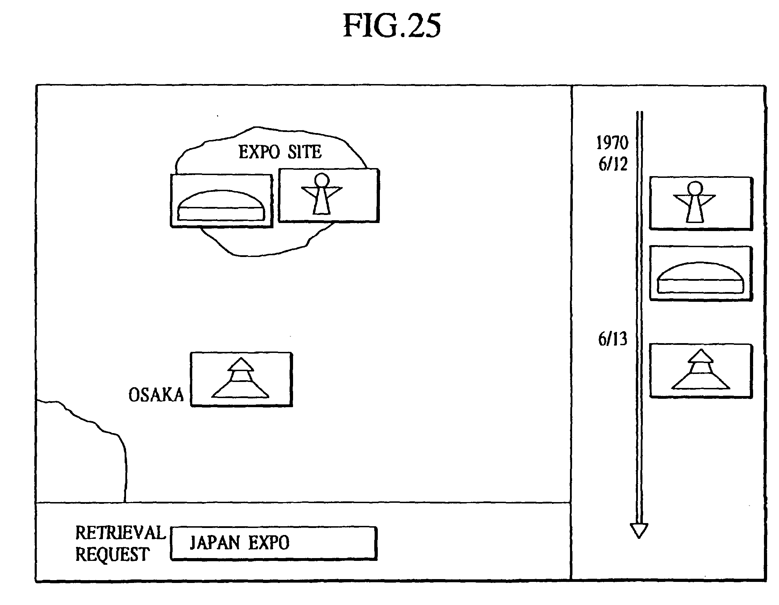

Next, Fig. 25 shows an exemplary display screen showing a retrieval result obtained by the retrieval using an event name "Japan EXPO" as the retrieval request. In this example, in addition to the photographs taken at the Japan EXPO in 1970, a photograph of the "Osaka-jo castle" that was taken on the way back from that trip is also displayed. This vicinity retrieval function for displaying data of close locations or similar times together with the data corresponding to the retrieval request is very effective in the case where the user carries out the retrieval based on vague recollections.

Note that, in the case of simultaneously displaying the retrieval result that corresponds to the retrieval target and the vicinity retrieval result that does not corresponds to the retrieval target exactly, it is also passible to indicate the difference between them by using different display manners for them. For example, the vicinity retrieval result can be displayed in a lighter tone, or in a different color, or in a smaller size, or by using a different mark, etc.

It is also possible to enable the user to select whether or not to utilize the vicinity retrieval function in the case of providing this function in the multimedia data retrieval device.

Note that the multimedia data retrieval device for carrying out the retrieval through the front-end program using GUI as described above (which can be realized in a form of utilizing the index server or in a form of not utilizing the index server, which can be realized in a form of managing the multimedia data by this device itself or in a form of managing the multimedia data by another computer, and which can be realized in many other variations as already described above) can be realized by displaying the GUI display screen on a computer executing the front-end program and a program (which will be referred to as a multimedia data retrieval program) corresponding to functions of the multimedia data retrieval device, but it is also possible to realize this multimedia data retrieval device as follows.

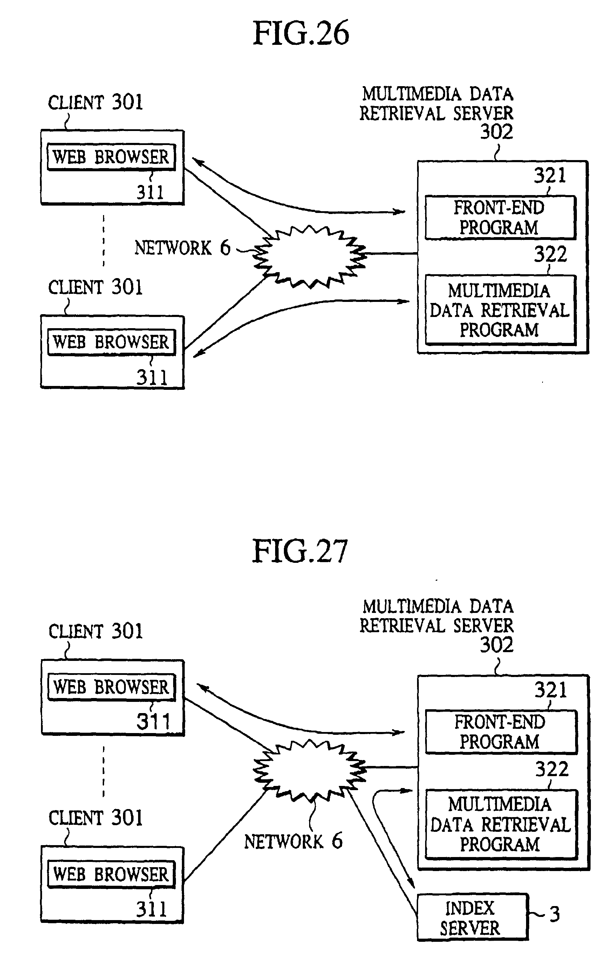

For example, as shown in Fig. 26, in the case of the multimedia data retrieval device not utilizing the index server, a computer 301 (which will be referred to as a client) for displaying the GUI display screen and a computer (which will be referred to as a multimedia data retrieval server) 302 for executing a front-end program 321 and a multimedia data retrieval program 322 can be provided as separate devices that are connectable through the network 6 such as the Internet or an intranet, such that the front-end program 321 on the multimedia data retrieval server 302 can be operated through a WEB browser 311 on the client 301.

In this case, the front-end program and the multimedia data retrieval program can be operated from any computer (a computer on which the WEB browser is mounted) on the network.

The similar configuration is also applicable to the case of the multimedia data retrieval device utilizing one or a plurality of index servers 3 as shown in Fig. 27.

Note that it is also possible to manage the multimedia data by another computer (which will be referred to as a multimedia data management server) connected to the network 6 in the configuration of Fig. 26 or Fig. 27.

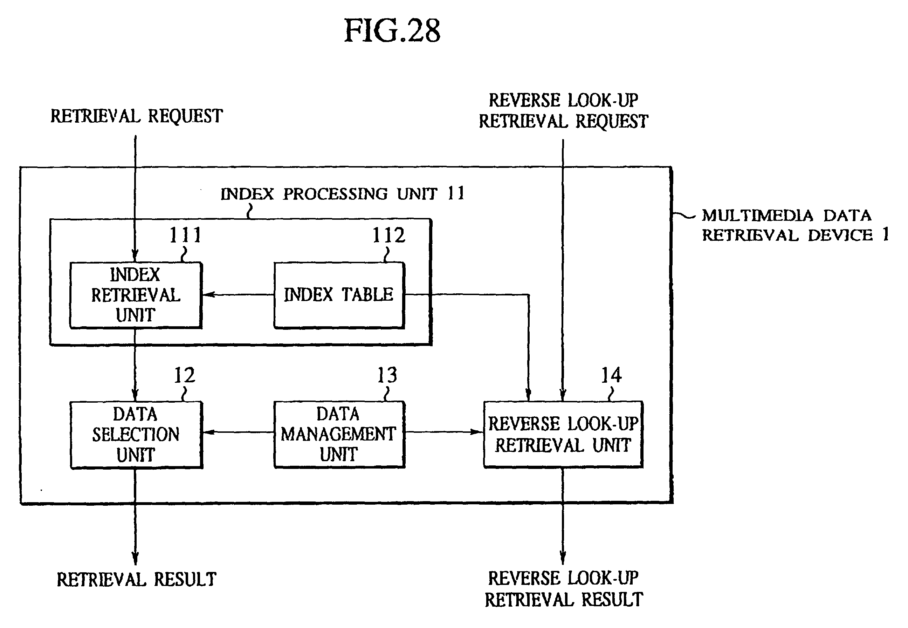

Referring now to Fig. 28 to Fig. 32, another embodiment of a multimedia data retrieval scheme according to the present invention will be described in detail.

The multimedia data retrieval device of this embodiment has a reverse look-up retrieval function for retrieving corresponding one or a plurality of event names by specifying a specific multimedia data, in addition to the functions of the multimedia data retrieval device of the previous embodiment. By using this reverse look-up retrieval function, it becomes possible to obtain information useful in ascertaining what is imaged on a specific photograph. Also, by carrying out the retrieval again by using the event names so obtained, it also becomes possible to retrieve photographs that are related to some photograph.

In the following, this new function to be added to the previous embodiment will be mainly described.

The reserve look-up retrieval function can be realized by looking up the index table for looking up the time information and the location information regarding the event from the event name, in a reverse direction. Namely. the index table is usually looked up by using the event name as a key, but in the case of the reverse look-up retrieval, events that contain either one or both of the specified time information and location information (or events that are not corresponding to them exactly but corresponding to close locations or similar times in addition to them) are retrieved.

Fig. 28 shows an exemplary configuration of the multimedia data retrieval device which has this reverse look-up retrieval function. Fig. 28 shows a configuration in which the reverse look-up retrieval function is provided in the multimedia data retrieval device having a local index table as shown in Fig. 1 and Fig. 8.

A reverse look-up retrieval request of the user is entered into a reverse look-up retrieval unit 14, and the reverse look-up retrieval unit 14 carries out the reverse look-up retrieval by utilizing the multimedia data managed by the data management unit 13 and the index table 111 of the index processing unit 12 and outputs the retrieval result.

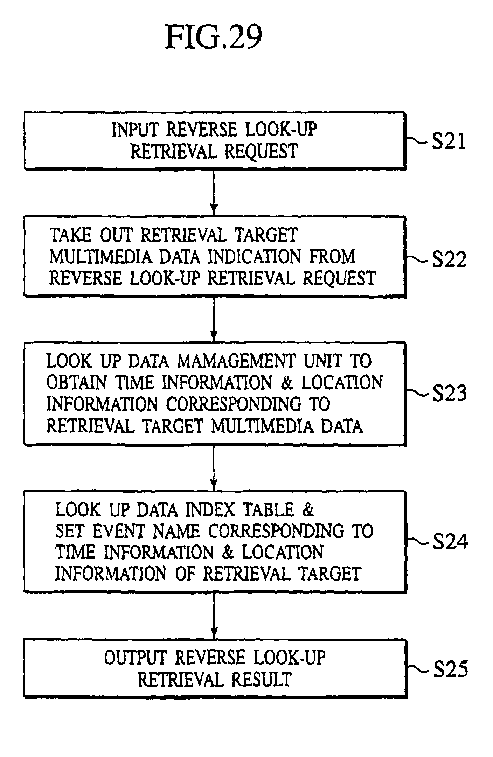

Fig. 29 shows an exemplary procedure of the operation of the reverse look-up retrieval unit 14.

The reverse look-up retrieval unit 14 first receives the reverse look-up retrieval request from the user (step S21). The user requests the reverse look-up retrieval by specifying the multimedia data such as a digital photograph from which the reverse look-up of the event name is desired. At this point, as a method for specifying the multimedia data, a name that can uniquely identify the multimedia data managed by the data management unit 13 can be used, In the case of specifying the reverse look-up retrieval through the front-end program using GUI, it is possible to issue the reverse look-up retrieval request using a name for uniquely identifying a photograph displayed on the screen when that photograph is specified on the screen, for the convenience of the user.

Upon receiving the reverse look-up retrieval request, the reverse look-up retrieval unit 14 takes out the retrieval target specification, such as an identifier for specifying the multimedia data to be retrieved by the reverse look-up retrieval for example, from that reverse look-up retrieval request (step S22).

Next, the reverse look-up retrieval unit 14 takes out the time information and the location information of the retrieval target multimedia data that is managed by the data management unit 13 (step S23). Then, the reverse look-up retrieval unit 14 retrieves those events which have the time information and the location information that contain the time information and the location information of the retrieval target so obtained, from the index table 112 (step S24).

Note that there are various methods for realizing this reverse look-up retrieval, including a method for retrieving events corresponding to both the time information and the location information of the specified multimedia data, a method for retrieving events which have only one of the time information and the location information which matches the specified time information or location information in addition, a method for retrieving events which have at least one of the time information and the location information that matches the specified time information and location information, and a method for retrieving events which have at least one of the time information and the location information that does not match the specified one exactly but that has a value closer to the specified one in addition to any of the events described above.

Note also that the number of events that can be retrieved here is not necessarily one and a plurality of events may be retrieved.

One or a plurality of event names retrieved in this way are then returned as a reverse look-up retrieval result (step S25). In the case where the reverse look-up retrieval result contains a plurality of event names, the event that includes the retrieval target or the event that is closer to the retrieval target in terms of time information or the location information can be given a higher priority level, and the retrieved event names can be rearranged in a descending order of the priority levels, so as to enable more effective utilization of the retrieval result. It is also possible to return the retrieval result by attaching a score indicating the priority level to each event name.

It should be apparent that this reverse look-up retrieval function is also applicable to the multimedia data retrieval device which utilizes the index server as shown in fig. 11.

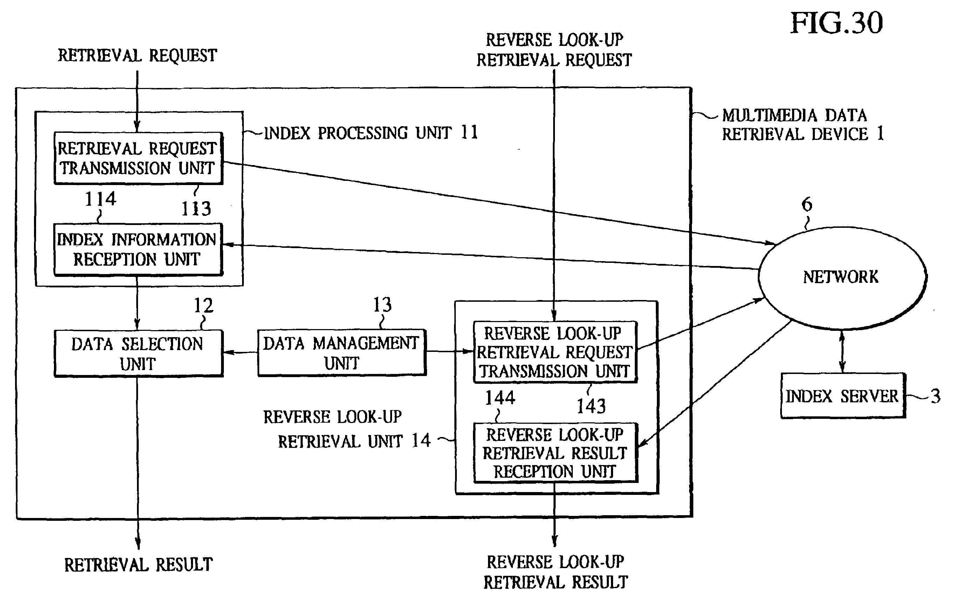

Fig. 30 shows an exemplary configuration of the multimedia data retrieval device which has the reverse look-up retrieval function utilizing the index server.

In this exemplary configuration, the reverse look-up retrieval unit 14 comprises a reverse look-up retrieval request transmission unit 143 and a reverse look-up retrieval result reception unit 144.

The reverse look-up retrieval request from the user is entered into the reverse look-up retrieval request transmission unit 143. The reverse look-up retrieval request transmission unit 143 first takes out the retrieval target multimedia data specified in the reverse look-up retrieval request of the user, and obtains the time information and/or the location information of the specified retrieval target multimedia data from the data management unit 13. The time information and/or the location information of the retrieval target so obtained are then transmitted through the network 6 as the reverse look-up retrieval request to the index server 3 having the reverse look-up retrieval function. The index server 3 transmits the reverse look-up retrieval result through the network 6. The reverse look-up retrieval result reception unit 144 receives the reverse look-up retrieval result from the index server 3 and outputs it as the reverse look-up retrieval result.

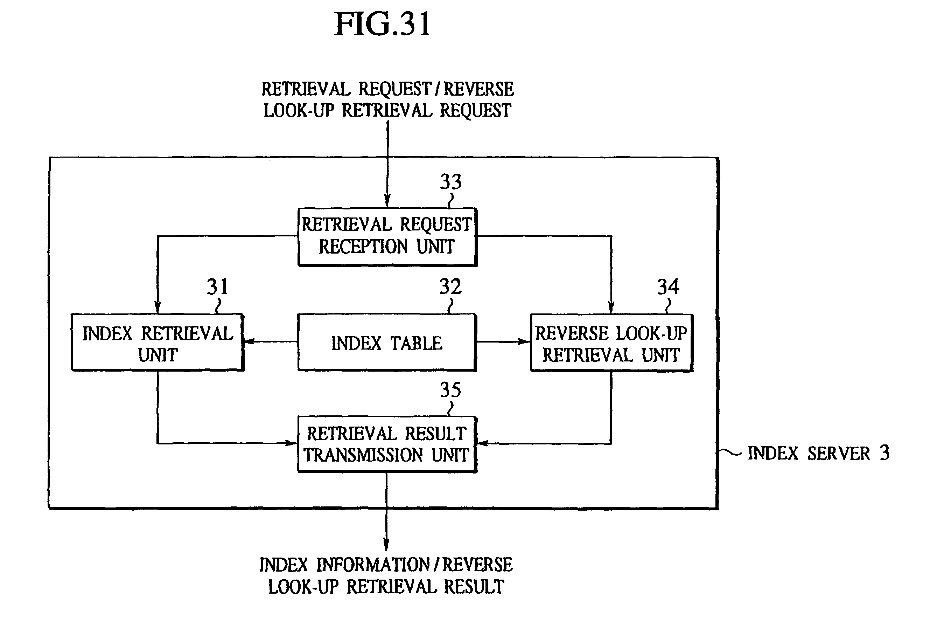

Fig. 31 shows an exemplary configuration of the index server 3 having the reverse look-up retrieval function.

In this exemplary configuration, the retrieval request sent to the index server 3 is received by a retrieval request reception unit 33, and given to an index retrieval unit 31 if it is an ordinary retrieval request or to a reverse look-up retrieval unit 34 if it is a reverse look-up retrieval unit 34.

The operation of the index retrieval unit 31 is the same as that in the index server of Fig. 13.

The reverse look-up retrieval unit 34 retrieves those events which have the time information and the location information that contain the time information and the location information of the retrieval target specified in the reverse look-up retrieval request, or those events which have the time information and the location information close to the time information and the location information of the retrieval target, from the index table 32 as described above, by looking up the index table 32 that is shared with the index retrieval unit 31. Then, the retrieved one or a plurality of event names are given to the retrieval result transmission unit 35 as the retrieval result.

The retrieval result transmission unit 35 then returns the retrieval result given from the index retrieval unit 31 or the reverse look-up retrieval unit 34 to the multimedia data retrieval device 1 that issued the retrieval request.

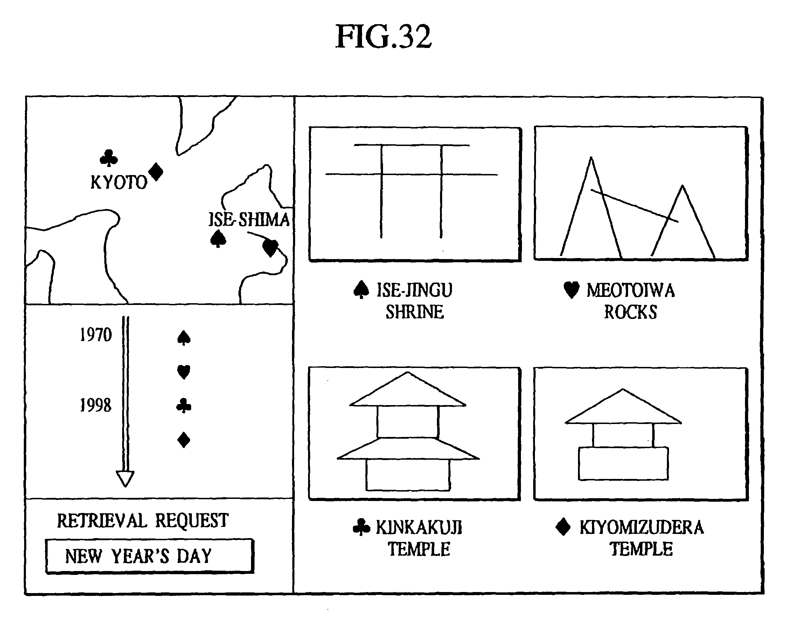

Fig. 32 shows an exemplary GUI display screen in the multimedia data retrieval device having the reverse look-up retrieval function which is configured to be utilized through a front-end program using GUI. The example of Fig. 32 is a display screen showing a result of the retrieval of digital photograph data by using an event name "New year's day" as the retrieval request, similarly as in the example of Fig. 24. Here, unlike the example of Fig. 24, an event name of an event that is supposed to be shown in each photograph is displayed below each photograph in the photograph display region on the right side. This event name is obtained by carrying out the reverse look-up retrieval with respect to each photograph data and selecting one event name with the highest priority level among the retrieved event names.

There are various methods that can be used as a method for displaying the reverse look-up retrieval result. For example, when a plurality of event names are retrieved with respect to one photograph, a prescribed number of event names are displayed in the descending order of the priority levels, or only one event name with the highest priority level is displayed along with an indication that there are other retrieved event names such that the other event names can be viewed by an operation such as a clicking of an icon, for example. It is also possible to display the event names retrieved by the reverse look-up retrieval at corresponding locations on the map in the location display region.

It should be apparent to those skilled in the art that the multimedia data retrieval device having the reverse look-up retrieval function of this embodiment can be modified similarly as the multimedia data retrieval device of the previous embodiment, by providing a plurality of index tables, or by utilizing the local index table and the remote index server in combination.

Also, in the case of carrying out the retrieval through a front-end program using GUI, a computer for displaying the GUI screen can be provided separately such that the front-end program and the multimedia data retrieval program can be operated from any computer with the WEB browser mounted thereon on the network, similarly as in the previous embodiment. Besides these, the various exemplary configurations and variations described for the multimedia data retrieval device of the previous embodiment are also applicable to the multimedia data retrieval device of this embodiment.

Note that the retrieval target data of the multimedia data retrieval device of the present invention are not limited to still images of digital cameras or scanners or moving pictures of digital video cameras or digital broadcasting as in the embodiments described above, and can be any data as long as data are managed in relation to either one or both of the time information and the location information. For example, with respect to various events such as sightseeing sites, festivals, concerts, exhibitions, athletic competitions, etc., it is also possible to similarly manage and retrieve any of documents describing these events, links to the WEB pages containing Information regarding these events, links to encyclopedia sections that explain these events, links to on-line shops that sell tickets or records of these events, etc.

Note also that it is preferable for the multimedia data retrieval device of the present invention to handle the time information of each event or the time information that is related to the multimedia data by accounting for the time differences.

Note also that it is preferable for the multimedia data retrieval device of the present invention to register each event name in a plurality of languages (such as Japanese, English, French, Spanish, Italian, Chinese, Russian, etc.) such that the retrieval can be carried out in different languages.

As described, according to the present invention, the multimedia data are managed by using the time information and the location information, and when a retrieval request specified by using one or a plurality of event names is received, the multimedia data are retrieved by using the time information and/or the location information corresponding to the retrieval request that are obtained according to the event names from the index table or the index server, so that there is no need for tedious tasks of classifying the multimedia data to be managed into directories or folders or attaching keywords for the purpose of the retrieval, and it becomes possible to retrieve the desired multimedia data by using an event name or a combination of event names that are intuitive and easily comprehensible for the users.

It is to be noted that the above described embodiments according to the present invention may be conveniently implemented using a conventional general purpose digital computer programmed according to the teachings of the present specification, as will be apparent to those skilled in the computer art. Appropriate software coding can readily be prepared by skilled programmers based on the teachings of the present disclosure, as will be apparent to those skilled in the software art.

In particular, the multimedia data retrieval device or the index server of each of the above described embodiments can be conveniently implemented in a form of a software package.

Such a software package can be a computer program product which employs a storage medium including stored computer code which is used to program a computer to perform the disclosed function and process of the present invention. The storage medium may include, but is not limited to, any type of conventional floppy disks, optical disks, CD-ROMs, magneto-optical disks, ROMs, RAMs, EPROMs, EEPROMs, magnetic or optical cards, or any other suitable media for storing electronic instructions.

It is also to be noted that. besides those already mentioned above, many modifications and variations of the above embodiments may be made without departing from the novel and advantageous features of the present invention. Accordingly, all such modifications and variations are intended to be included within the scope of the appended claims.

## Claims

1. A multimedia data retrieval method, comprising:
(a) managing each one of a plurality of multimedia data in relation to time information and/or location information indicating a time and/or a location at which each multimedia data is created;
(b) obtaining the time information and/or the location information corresponding to a retrieval request upon receiving the retrieval request specified by using event names; and
(c) retrieving multimedia data from the plurality of multimedia data managed by the step (a), according to the time information and/or the location information obtained by the step (b).

2. The method of claim 1, wherein the step (b) obtains the time information and/or the location information corresponding to the retrieval request by referring to an index table that contains a plurality of event names and the time information and/or the location information that are related to each event name.

3. The method of claim 2, wherein the step (b) utilizes schedule data as the index table, by taking name information indicating schedule contents as the event names, date and time information of schedules as the time information, and place information of schedules as the location information.

4. The method of claim 1, wherein the step (b) obtains the time information and/or the location information corresponding to the retrieval request from an index server by transmitting the retrieval request to the index server which has a function for obtaining the time information and/or the location information that are related to each event name.

5. The method of claim 1, further comprising:
(d) obtaining the time information and/or the location information that are related to one multimedia data upon receiving a reverse look-up retrieval request specifying said one multimedia data; and
(e) retrieving event names according to the time information and/or the location information obtained by the step (d) as a reverse look-up retrieval result.

6. The method of claim 1, wherein the step (a) manages each multimedia data in relation to the time information and/or the location information which are automatically created in relation to a creation of each multimedia data.

7. A multimedia data retrieval device, comprising:
a data management unit configured to manage each one of a plurality of multimedia data in relation to time information and/or location information indicating a time and/or a location at which each multimedia data is created;
a processing unit configured to obtain the time information and/or the location information corresponding to a retrieval request upon receiving the retrieval request specified by using event names; and
a data selection unit configured to retrieve multimedia data from the plurality of multimedia data managed by the data management unit, according to the time information and/or the location information obtained by the processing unit.

8. A computer usable medium having computer readable program codes embodied therein for causing a computer to function as a multimedia data retrieval device, the computer readable program codes include:
a first computer readable program code for causing said computer to manage each one of a plurality of multimedia data in relation to time information and/or location information indicating a time and/or a location at which each multimedia data is created;
a second computer readable program code for causing said computer to obtain the time information and/or the location information corresponding to a retrieval request upon receiving the retrieval request specified by using event names; and
a third computer readable program code for causing said computer to retrieve multimedia data from the plurality of multimedia data managed by the first computer readable program code, according to the time information and/or the location information obtained by the second computer readable program code.

9. An index information providing method, comprising:
(a) receiving a retrieval request specified by using event names, through a network from a requestor;
(b) obtaining time information and/or location information corresponding to the retrieval request received by the step (a) according to the event names used in the retrieval request by referring to an index table that contains a plurality of event names and the time information and/or the location information that are related to each event name, the time information and/or the location information indicating a time and/or a location at which each multimedia data is created; and
(c) providing the time information and/or the location information obtained by the step (b) as an index information, through the network to the requestor.

10. The method of claim 9. wherein the index table includes a plurality of personal index tables and a common index table, and the step (b) obtains the time information and/or the location information by referring at least to one of the personal index table corresponding to the requestor and the common index table.

11. The method of claim 9, wherein the step (b) utilizes schedule data as the index table, by taking name information indicating schedule contents as the event names, date and time information of schedules as the time information, and place information of schedules as the location information.

12. An index server, comprising:
a request reception unit configured to receive a retrieval request specified by using event names, through a network from a requestor;
a processing unit configured to obtain time information and/or location information corresponding to the retrieval request received by the request reception unit according to the event names used in the retrieval request by referring to an index table that contains a plurality of event names and the time information and/or the location information that are related to each event name, the time information and/or the location information indicating a time and/or a location at which each multimedia data is created; and
an index information transmission unit configured to provide the time information and/or the location information obtained by the processing unit as an index Information, through the network to the requestor.

13. A computer usable medium having computer readable program codes embodied therein for causing a computer to function as an index server, the computer readable program codes include:
a first computer readable program code for causing said computer to receive a retrieval request specified by using event names, through a network from a requestor;
a second computer readable program code for causing said computer to obtain time information and/or location information corresponding to the retrieval request received by the first computer readable program code according to the event names used in the retrieval request by referring to an index table that contains a plurality of event names and the time information and/or the location information that are related to each event name, the time information and/or the location information indicating a time and/or a location at which each multimedia data is created; and
a third computer readable program code for causing said computer to provide the time information and/or the location information obtained by the second computer readable program code as an index information, through the network to the requestor.

14. A multimedia data retrieval method, comprising:
(a) managing each one of a plurality of multimedia data in relation to time information and/or location information indicating a time and/or a location at which each multimedia data is created;
(b) receiving a retrieval request specified by using event names, through a network from a requestor;
(c) obtaining the time information and/or the location information corresponding to the retrieval request received by the step (b);
(d) retrieving multimedia data from the plurality of multimedia data managed by the step (a), according to the time information and/or the location information obtained by the step (c); and
(e) providing the multimedia data retrieved by the step (d) as a retrieval result, through the network to the requestor.

15. The method of claim 14, wherein the step (c) obtains the time information and/or the location information corresponding to the retrieval request by referring to an index table that contains a plurality of event names and the time information and/or the location information that are related to each event name.

16. The method of claim 14, further comprising:
(f) obtaining the time information and/or the location information that are related to one multimedia data upon receiving a reverse look-up retrieval request specifying said one multimedia data; and
(g) retrieving event names according to the time information and/or the location information obtained by the step (f) as a reverse look-up retrieval result.

17. A multimedia data retrieval server, comprising:
a data management unit configured to manage each one of a plurality of multimedia data in relation to time information and/or location information indicating a time and/or a location at which each multimedia data is created;
a request reception unit configured to receive a retrieval request specified by using event names, through a network from a requestor;
a processing unit configured to obtain the time information and/or the location information corresponding to the retrieval request received by the request reception unit;
a data selection unit configured to retrieve multimedia data from the plurality of multimedia data managed by the data management unit, according to the time information and/or the location information obtained by the processing unit; and
a retrieval result transmission unit configured to provide the multimedia data retrieved by the data selection unit as a retrieval result, through the network to the requestor.

18. A computer usable medium having computer readable program codes embodied therein for causing a computer to function as a multimedia data retrieval server, the computer readable program codes include:
a first computer readable program code for causing said computer to manage each one of a plurality of multimedia data in relation to time information and/or location information indicating a time and/or a location at which each multimedia data is created;
a second computer readable program code for causing said computer to receive a retrieval request specified by using event names, through a network from a requestor;
a third computer readable program code for causing said computer to obtain the time information and/or the location information corresponding to the retrieval request received by the second computer readable program code;
a fourth computer readable program code for causing said computer to retrieve multimedia data from the plurality of multimedia data managed by the first computer readable program code, according to the time information and/or the location information obtained by the third computer readable program code; and
a fifth computer readable program code for causing said computer to provide the multimedia data retrieved by the fourth computer readable program code as a retrieval result, through the network to the requestor.

19. A method for providing an index information providing service from an index server to multimedia data retrieval devices which are connected through a network, each multimedia data retrieval device managing each one of a plurality of multimedia data in relation to time information and/or location information indicating a time and/or a location at which each multimedia data is created, the method comprising:
(a) receiving a retrieval request specified by using event names, at the index server through the network from a requesting multimedia data retrieval device;
(b) obtaining the time information and/or the location information corresponding to the retrieval request received by the step (a) at the index server according to the event names used in the retrieval request by referring to an index table that contains a plurality of event names and the time information and/or the location information that are related to each event name; and
(c) providing the time information and/or the location information obtained by the step (b) as an index information, from the index server through the network to the requesting multimedia data retrieval device, so as to enable the requesting multimedia data retrieval device to retrieve multimedia data from the plurality of multimedia data according to the time information and/or the location information obtained from the index server.

20. A method for providing a multimedia data retrieval service from a multimedia data retrieval server to clients which are connected through a network, the method comprising:
(a) managing each one of a plurality of multimedia data at the multimedia data retrieval server in relation to time information and/or location information indicating a time and/or a location at which each multimedia data is created;
(b) receiving a retrieval request specified by using event names, at the multimedia data retrieval server through a network from a requesting client;
(c) obtaining the time information and/or the location information corresponding to the retrieval request received by the step (b) at the multimedia data retrieval server;
(d) retrieving multimedia data from the plurality of multimedia data managed by the step (a) at the multimedia data retrieval server, according to the time information and/or the location information obtained by the step (c); and
(e) providing the multimedia data retrieved by the step (d) as a retrieval result, from the multimedia data retrieval server through the network to the requesting client, so as to enable the requesting client to obtain the multimedia data matching with the retrieval request.
